# EUROPEAN PATENT SPECIFICATION

(11) **EP 4 325 196 B1**
(45) Date of publication and mention of the grant of the patent: **01.04.2026**
(21) Application number: 23190080.4
(22) Date of filing: 07.08.2023
(51) Int. Cl.: G01M 99/00, B60L 3/00, B60L 3/12, G01M 3/00, G01M 15/04, G01M 13/04, G01M 17/10

(54) **DIAGNOSTIC SYSTEM AND METHOD**
DIAGNOSESYSTEM UND -VERFAHREN
SYSTÈME ET PROCÉDÉ DE DIAGNOSTIC

(30) Priority: 16.08.2022 US 202263398409 P; 10.03.2023 US 202318120275; 20.07.2023 US 202318356198
(43) Date of publication of application: 21.02.2024
(73) Proprietor: Transportation IP Holdings, LLC, Norwalk, CT 06851 (US)
(72) Inventor: Snyder, Robert, Norwalk, CT, 06851 (US); Lin, Long Wang Lucas, Norwalk, CT, 06851 (US); Bailey, Bill, Norwalk, CT, 06851 (US); Cillessen, Sean Patrick, Norwalk, CT, 06851 (US); Kernwein, Jeffrey D., Norwalk, CT, 06851 (US); Tripathy, Janmejay, Norwalk, CT, 06851 (US); Staats, Andrew Ryan, Norwalk, CT, 06851 (US); Schultz, Timothy Allen, Norwalk, CT, 06851 (US); Karunaratne, Milan, Norwalk, CT, 06851 (US); Sevel, Evan, Norwalk, CT, 06851 (US); Hausmann, Adam, Norwalk, CT, 06851 (US); Chalmers, Larry, Norwalk, CT, 06851 (US); Fisher, Alan, Norwalk, CT, 06851 (US); Kenjale, Amit, Norwalk, CT, 06851 (US); Henniges, Benjamin, Norwalk, CT, 06851 (US); Spencer, Daniel, Norwalk, CT, 06851 (US); Rice, Danial, Norwalk, CT, 06851 (US)
(74) Representative: Novagraaf Group

(56) References cited:
- CN-B- 103 154 697
- JP-A- 2001 197 602
- US-B2- 9 908 545

## Description

### CROSS-REFERENCE TO RELATED APPLICATIONS

This application claims priority to U.S. Provisional Patent Application No. 63/398,409 (filed 16-August-2022). This application also is a continuation-in-part of U.S. Patent Application No. 18/120,275 (filed 10-March-2023), which is a continuation-in-part of U.S. Patent Application No. 17/181,667 (filed 22-February-2021), a continuation-in-part of U.S. Patent Application No. 16/399,019 (filed 30-April-2019), and a continuation-in-part of U.S. Patent Application No. 17/237,686 (filed 22-April-2021).

### BACKGROUND

### Technical Field.

The subject matter described herein relates to systems and methods that diagnose and/or predict a condition of components of powered systems.

### Discussion of Art.

Some diagnostic systems can examine temperatures of components of powered systems, such as vehicles, to identify problems with components of the powered systems. For example, hot wheel detectors may measure temperatures of wheels of rail vehicles to determine whether there are stuck axles, bearings, or other problems with the wheels or axles (e.g., defects or faults). But these diagnostic systems may be limited in that the systems may only identify problems with components when a measured temperature exceeds an absolute temperature threshold. Stated differently, these diagnostic systems may only identify a problem with an axle when the measured temperature of that axle, motor, etc., exceeds a threshold. This simple comparison can miss other problems or issues with the powered systems that may cause or give rise to the problem. Related systems and methods are described in US 9 908 545 B2, wherein a temperature profile is monitored at a contact interface between a wheel of the vehicle system and a rail of the track that contacts the wheel. The temperature profile is further analysed to detect a flanging event between the wheel and the rail as the vehicle system.

Additionally, some diagnostic systems may be limited to only notifying the operator onboard the powered system of the detected defect or fault. However, this notification may be missed or may not be received before reliance on the defective part is needed. For example, detection of a hot wheel or hot axle, missing brake shoe, etc., may be reported to an onboard operator after the operator commands the vehicle to brake the hot wheel, hot axle, or brake having the missing shoe.

It may be desirable to have a diagnostic system and method that differs from those that are currently available.

### BRIEF DESCRIPTION

This application discloses a computer implemented method according to claim 1.

This application also discloses a diagnostic system according to claim 8.

In an example, not claimed by the present application, a diagnostic system may include one or more processors that receive thermal measurements of brakes of a vehicle system. The processor(s) can identify an abnormal state of at least one of the brakes based on a thermal signature of the at least one brake or another component of the vehicle system. The processor(s) can individually control the brakes of the vehicle system by cutting out the at least one of the brakes with the abnormal state that is identified from upcoming applications of the brakes.

### BRIEF DESCRIPTION OF THE DRAWINGS

The subject matter may be understood from reading the following description of non-limiting embodiments, with reference to the attached drawings, wherein below:
Figure 1 illustrates an elevational view of one example of a diagnostic system, a powered system, an off-board control system, and an off-board maintenance system;
Figure 2 illustrates a plan view of one example of the diagnostic system shown in Figure 1;
Figure 3 illustrates one example of a thermal signature;
Figure 4 illustrates another example of a thermal signature;
Figure 5 illustrates another example of a thermal signature;
Figure 6 illustrates another example of a thermal signature;
Figure 7 illustrates another example of a thermal signature;
Figure 8 illustrates another example of a thermal signature;
Figure 9 illustrates another example of a thermal signature;
Figure 10 illustrates another example of a thermal signature;
Figure 11 illustrates a flowchart of one example of a method for diagnosing or predicting conditions of components of the powered system;
Figure 12 illustrates one example of several powered systems;
Figure 13 illustrates another example of a powered system;
Figure 14 illustrates one example of a vehicle control system;
Figure 15 is a diagram that illustrates another example of a diagnostic system;
Figure 16 illustrates another example of a diagnostic system; and
Figure 17 illustrates a flowchart of another example of a method for controlling operation of a powered system.

### DETAILED DESCRIPTION

Embodiments of the subject matter described herein relate to diagnostic systems and methods that examine thermal signatures of components of powered systems to identify one or more conditions of the components of the powered systems, as well as conditions of other components of the powered systems. As described herein, some of the diagnostic systems can not only identify problems with the components whose temperatures are measured, but also identify other (e.g., secondary) components whose operation may impact the condition of other components (e.g., the primary components whose measurements are obtained), and thereby give rise to unexpected or out-of-range thermal measurements.

While one or more embodiments are described in connection with a rail vehicle system, not all embodiments are limited to rail vehicle systems. Unless expressly disclaimed or stated otherwise, the subject matter described herein extends to other types of vehicle systems, such as automobiles, trucks (with or without trailers), buses, marine vessels, aircraft, mining vehicles, agricultural vehicles, maintenance of way vehicles, refrigerated vehicles, passenger rail cars, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

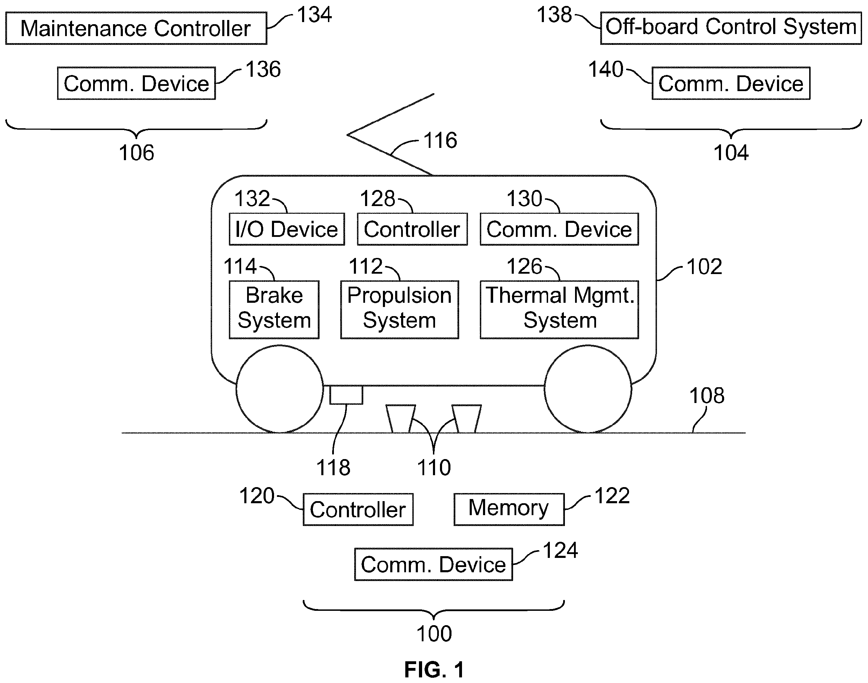

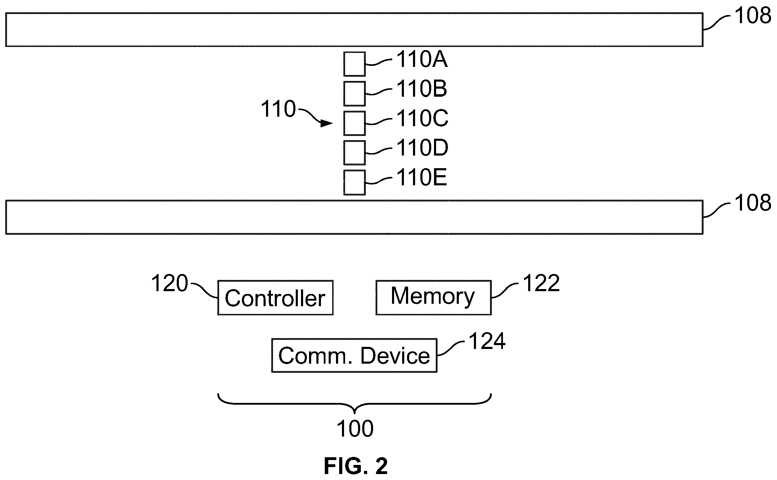

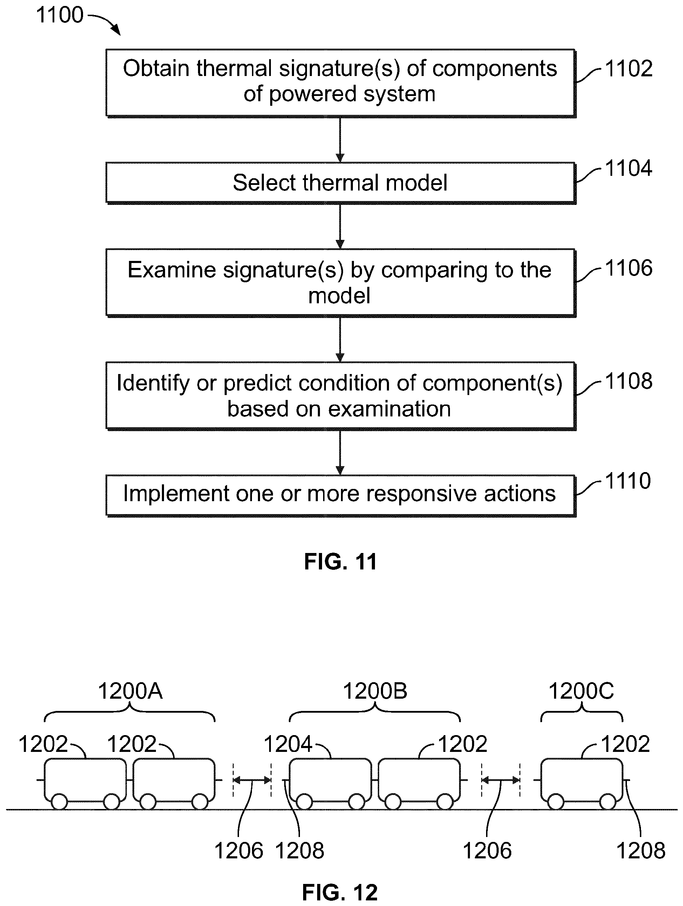

Figure 1 illustrates an elevational view of one example of a diagnostic system 100, a powered system 102, an off-board control system 104, and an off-board maintenance system 106. Figure 2 illustrates a plan view of one example of the diagnostic system shown in Figure 1. The operations of these systems are described in connection with Figure 11, which illustrates a flowchart of one example of a method 1100 for diagnosing or predicting conditions of components of the powered system. The method may be performed by the diagnostic system and/or another system.

The diagnostic system may examine thermal measurements of one or more powered systems to determine conditions or states of components of the powered systems based on the thermal measurements and identify which of those components (or other components) are the cause or potential cause of abnormal operating states or conditions of the components. As used herein, a primary component can refer to a component of the powered system of which thermal measurements are taken and a secondary component can refer to a component of the powered system of which the thermal measurements may or may not be taken, but whose operation may result in out-of-range or unacceptable thermal measurements of a primary component. An abnormal, failed, worn, deteriorated, etc. condition of a component may refer to a component that is no longer to operate at all, that is able to operate but with a maximum output that is less than a prior maximum output of the component, or the like.

The powered system is shown as a vehicle in Figure 1, such as a rail vehicle, an automobile, an agricultural vehicle, a mining vehicle, a marine vessel, an aircraft (manned or unmanned), or the like. While only a single vehicle is shown, the vehicle may be coupled with one or more other vehicles. For example, the vehicle may represent a vehicle system formed from two or more vehicles that are mechanically coupled with each other to move together along routes 108 or that are not mechanically coupled with each other, but that communicate with each other or with another system to coordinate movements such that the vehicles move together along the routes (e.g., as a convoy, swarm, or the like). Optionally, the powered system can be a system other than a vehicle, such as a fuel cell or fuel cell system, a stationary power supply station or electric charging station, a heating, ventilation, and air conditioning (HVAC) system, a transformer, or another system whose temperatures can be measured to identify potential issues or faults. The route can be a track formed of one or more rails (as shown in Figure 2), a road, pathway, or the like.

The diagnostic system may include one or more thermal sensors 110 (e.g., thermal sensors 110A-E). In the illustrated embodiment, the diagnostic system includes several thermal sensors embedded in, disposed on, and/or disposed alongside the route. Optionally, the thermal sensors may be above the powered system, to the side of the powered system, and/or be mobile relative to the powered system. In one embodiment, the sensors may be vehicle mounted, and suitable vehicles include the vehicle being measured, another vehicle of the type being measured, or a mobile sensor package (such as an aerial, track, or land-based drone). The thermal sensors may be in different locations to measure temperatures of different locations (and different components) of the powered system. A different number of sensors (such as a single sensor, fewer sensors than shown in Figures 1 and 2, or more sensors than shown in Figures 1 and 2) may be provided. In one embodiment, the thermal sensors represent infrared (IR) sensors or cameras that measure temperatures of components of the powered system, and in other embodiments may be, or may be coupled with, other, different sensors. Where infrared sensors are used, these may detect thermal signatures of components that are moved through the sensor field of vision. In one embodiment, the system can detect differences between infrared generated via heat and infrared generated via an electrical arc or flash. A sparking wire may be hot and be arcing, as such the system may detect one or both the heat and the arc, and in one embodiment may differentiate between the two signatures.

With respect to the method shown in Figure 11, at step 1102, one or more thermal signatures of components of the powered system are obtained. The thermal sensors can be positioned to measure temperatures of various components of the powered system. With respect to vehicles as the powered system, the thermal sensors can measure temperatures of components of a propulsion system 112 of the powered system, such as traction motors, electrical cables that conduct current to components (such as traction motors), axles, axle bearings, U-joints, gears, gear boxes, brake shoes, brake pads, or the like, that are located beneath the vehicle (or are closer to the bottom, or undercarriage, of the vehicle than other locations). The thermal sensors can measure the temperatures while the vehicle is moving relative to the sensors or can measure the temperatures while the vehicle system is stationary relative to the sensors. The thermal sensors can measure temperatures of components of a brake system 114 of the powered system, such as the traction motors of the propulsion system (that also brake using regenerative or dynamic braking), air brakes, friction brakes, resistive grids (used to dissipate energy created by regenerative braking as heat), exhaust system components (e.g., mufflers, exhaust gas recirculation systems, etc.), brake shoes, brake pads, or the like, that are located beneath the vehicle (or are closer to the bottom, or undercarriage, of the vehicle than other locations). The brake system may include air brakes, friction brakes, and/or dynamic brakes. The brake system can represent one or more brakes onboard the vehicle shown in Figure 1. In one example, the brakes of the brake system may include electronically controlled pneumatic brakes that can be individually controlled to engage or release the brakes by sending electronic signals to the brakes. As another example, the brakes may be pneumatic brakes controlled by communicating a pressure change (e.g., a pressure drop) along a brake pipe. As another example, the thermal sensors can be positioned above or to the side of the powered system to measure temperatures of a collector device 116, 118 of the vehicle, such as a component that transfers electric energy (e.g., current) from an off-board source to onboard the powered system, such as a pantograph, conductive shoe that engages an electrified rail, a wireless or inductive charging device, etc.

In another example, the powered system may be an energy tender that provides energy or a source of energy to another vehicle. This energy tender may carry battery cells, fuel (hydrogen for fuel cells, diesel fuel, liquid natural gas, gasoline, kerosene, dimethyl ether (DME), alcohol, natural gas (methane), a short chain hydrocarbon, hydrogen, ammonia, or the like), etc. A suitable diesel may include biodiesel or Fatty acid methyl esters (FAME). Optionally, the powered system may be a refrigerated vehicle having components of a thermal management system 126. The thermal management system can cool an interior compartment of the vehicle, such as a refrigerated truck, rail car, or the like, having a cooling system that cools the interior compartment. The thermal management system alternatively can manage heat of the powered system, such as a radiator, blowers or fans, or other components (and associated conduits that direct cooling air or gas flow) that cool components of the propulsion system.

A controller 120 of the diagnostic system may represent hardware circuitry that is connected to and/or includes one or more processors (e.g., microprocessors, integrated circuits, field programmable gate arrays, etc.) that perform the operations described herein in connection with the diagnostic system controller (also referred to as the diagnostic controller). The diagnostic controller can receive the thermal measurements of the powered system components that are obtained by the thermal sensors. The diagnostic controller can examine these thermal measurements as a thermal signature of the component(s) of the powered system. The thermal signature may be or include a combination of two or more thermal measurements obtained by the same or different sensors, may be or include a comparison (e.g., different, median, average, deviation, etc.) of the thermal measurements obtained by the same or different sensors, and/or may be or include a comparison of at least one of the thermal measurements and an ambient condition (e.g., the ambient temperature). Optionally, a thermal signature may include a combination and/or a comparison of the temperatures measured for multiple components of the powered system. The thermal measurements that make up or are included in the thermal signature can be measured at the same time or within a common time period, such as the time period during which the vehicle is moving over or by the thermal sensor. Alternatively, the thermal measurements that make up or are included in the thermal signature can be measured at different times or during different time periods.

The diagnostic controller and/or thermal sensors can store the temperature data and/or thermal signatures in a tangible and non-transitory computer readable storage device, such as a computer memory 122. A communication device 124 ("Comm. Device" in Figure 2) of the diagnostic system can communicate the thermal measurements/data, thermal signatures, notification signals, and/or control signals to one or more other systems, as described herein. The communication device can include transceiving circuitry, such as one or more transceivers, modems, antennas, or the like.

The diagnostic controller can examine the thermal signature to identify a condition or state of one or more of the components of the powered system. For example, the diagnostic controller can identify an abnormal operating or faulty condition (e.g., a default, fault, or failure of a component), or state of a component based on examination of the thermal signature. The component for which the state or condition is identified may be a different component than the component having the temperatures measured or may be the same component. The diagnostic controller optionally can identify a cause or potential cause of the condition or state of the component and may direct or implement one or more responsive actions responsive to identifying the state or condition of the component. The defect or fault that is identified can be a hot axle, a hot wheel, a failed bearing, a missing brake shoe, etc.

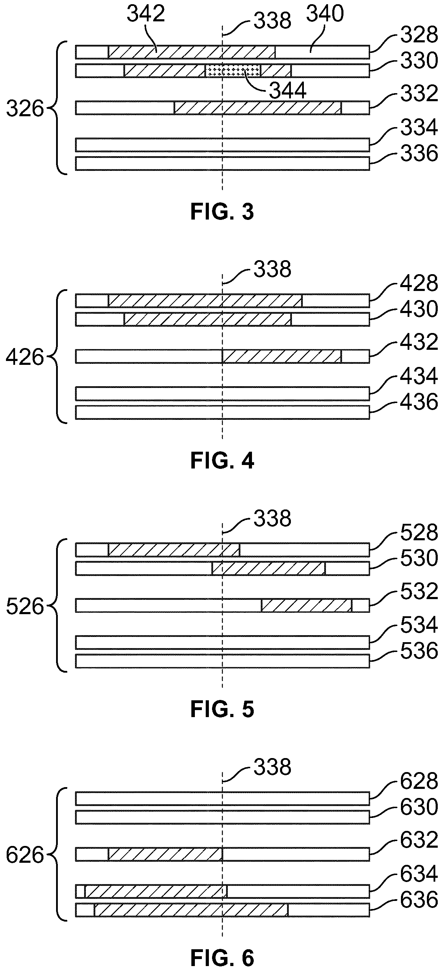

Figures 3 through 10 illustrate different examples of thermal signatures 326, 426, 526, 626, 726, 826, 926, 1026. As one example, the thermal signatures shown in Figures 3 through 8 represent the temperatures measured for components at or near six different axles of a vehicle during movement of a six-axle vehicle over the thermal sensors of the diagnostic system. The thermal signatures are formed of five sets of measured temperatures, with each of the sets representing the temperatures above a different thermal sensor of the sensors in the diagnostic system as the vehicle moves over the thermal sensor. The thermal signature 326 includes the sets 328, 330, 332, 334, 336, the thermal signature 426 includes the sets 428, 430, 432, 434, 436, and so on.

For example, the first set 328 of temperatures shown in Figure 3 can represent the temperatures measured by the thermal sensor 110A located closest to one of the rails or the edge of the route shown in Figure 2, the fifth set 336 of temperatures shown in Figure 3 can represent the temperatures measured by the thermal sensor 110E located closest to the other of the rails or the other edge of the route shown in Figure 2, the third set 332 of temperatures shown in Figure 3 can represent the temperatures measured by the thermal sensor 110C located midway between the outermost thermal sensors, the second set 330 of temperatures shown in Figure 3 can represent the temperatures measured by the thermal sensor 110B located between the top thermal sensor and the middle thermal sensor shown in Figure 2, and the fourth set 334 of temperatures shown in Figure 3 can represent the temperatures measured by the thermal sensor 110D located between the bottom thermal sensor and the middle thermal sensor shown in Figure 2. An alignment marker 338 is shown to indicate the location of a component (e.g., the axle) as the axle moved over or past the thermal sensors.

Each set can represent the temperatures measured by a thermal sensor as the powered system moves relative to the sensor (and/or the sensor moves relative to the powered system). For example, if the thermal signature represents the temperatures measured while a vehicle moved over the thermal sensors in a right-to-left direction in Figures 1 and 2, then the right-most side of each set represents the temperature measured by a different sensor in a location beneath the vehicle and ahead of a first axle of the vehicle along a direction of movement of the vehicle, the left-most side of each set represents the temperature measured by a different sensor in a location beneath the vehicle and behind of a first axle of the vehicle along a direction of movement of the vehicle, the middle of each set (e.g., the location where the alignment marker crosses the set) represents the temperature measured by a different sensor in a location beneath the vehicle and at the first axle of the vehicle along a direction of movement of the vehicle, etc. Different locations between the right-most and left-most edges or sides of each set and the alignment marker represent temperatures measured in locations between the location associated with the right-most edge or side and the alignment marker and in locations between the location associated with the left-most edge or side and the alignment marker, respectively. Conversely, if the thermal signature represents the temperatures measured while a vehicle moved over the thermal sensors in a left-to-right direction in Figures 1 and 2, then the left-most side of each set represents the temperature measured by a different sensor in a location beneath the vehicle and ahead the first axle of the vehicle along the direction of movement of the vehicle, the right-most side of each set represents the temperature measured by a different sensor in a location beneath the vehicle and behind the first axle of the vehicle along a direction of movement of the vehicle, and so on. The different thermal signatures can represent the temperatures measured ahead of, at, and behind different axles of a vehicle as the powered system, with the thermal signatures in Figures 3 through 8 representing temperatures measured ahead of, at, and behind six different axles of the vehicle.

In another example, the thermal signatures can represent temperatures measured of different components of the powered system at different times. For example, each set of a thermal signature can represent a temperature measured at different times for the same component. The left-most edge of each set can represent the first (or last) temperature that is measured for a component, and the right-most edge of each set can represent the last (or first) temperature that is measured for that component, with the portions between these edges representing temperatures measured for the component at different times between the first measured temperature and the last measured temperature.

Different portions 340, 342, 344 of each set of the thermal signatures are shaded differently in Figures 3 through 10 to indicate different measured temperatures. Each of the different portions can represent different temperatures or different ranges of temperatures. For example, the portions 340 can represent a cooler temperature or temperatures within a first cooler range of temperatures, the portions 342 can represent a warmer temperature than the portions 340 or temperatures within a second, warmer range of temperatures than the portions 340, and the portions 344 can represent a warmer temperature than the portions 340, 342 or temperatures within a third, warmer range of temperatures than the portions 340, 342. While only three portions are shown in Figures 3 through 10, several more temperatures or ranges of temperatures may be represented by a thermal signature.

The thermal sensors may be positioned so that each set of a thermal signature represents the temperatures measured at and/or around (e.g., ahead of and behind) a different component or set of components of the powered system. As one example, the sets 328, 428, 528, 628, 728, 828, 928, 1028 may represent temperatures measured ahead of, at, and behind motor bearings of a traction motor coupled with the corresponding axle and temperatures measured ahead of, at, and behind U-tube bearings of the axle. The sets 330, 430, 530, 630, 730, 830, 930, 1030 may represent temperatures measured ahead of, at, and behind locations between (a) the motor bearings of the traction motor and the U-tube bearings of the axle and (b) the traction motor. The sets 332, 432, 532, 632, 732, 832, 932, 1032 may represent temperatures measured ahead of, at, and behind the traction motor coupled with the corresponding axle. The sets 334, 434, 534, 634, 734, 834, 934, 1034 may represent temperatures measured ahead of, at, and behind other motor bearings of the traction motor coupled with the corresponding axle and temperatures measured ahead of, at, and behind other U-tube bearings of the axle. The sets 336, 436, 536, 636, 736, 836, 936, 1036 may represent temperatures measured ahead of, at, and behind a gearcase coupled with the corresponding axle. The sets 330, 430, 530, 630, 730, 830, 930, 1030 may represent temperatures measured ahead of, at, and behind brake devices, such as brake shoes. The sets 330, 430, 530, 630, 730, 830, 930, 1030 may represent temperatures measured ahead of, at, and behind wheels, axles, bearings, or the like. Alternatively, the different sets can represent temperatures measured for one or more other or different components.

The diagnostic controller can examine one or more thermal signatures of the powered system to identify (e.g., diagnose) a condition or state of a component, and/or to identify a cause of the condition or state of the component. The diagnosed component may be the same component of which the temperatures are measured by the thermal sensor(s) or may be a different component. For example (and as described below), the diagnostic controller can examine the thermal signatures associated with several (e.g., all) axles of a vehicle and determine, based on this examination, that elevated temperatures of the components are not caused by wear and tear of those components themselves, but of a different component, such as the thermal management system, an electrical cable, or the like.

With respect to the method shown in Figure 11, at step 1104, a thermal model may be selected. The diagnostic controller can examine the thermal signature(s) by selecting a thermal model from among several different thermal models and comparing the thermal signature(s) to the selected thermal model. The models may be stored in the memory of the diagnostic system. Similar to the thermal signatures, the thermal models can represent combinations of different temperatures or ranges of temperatures associated with different geographic locations of the powered system. For example, a thermal model may be similar to a thermal signature, but with the pattern or combination of locations of the temperatures or temperature ranges within one or several of the sets being associated with a diagnosed component, a condition of the diagnosed component, and/or a cause of the conditions of the diagnosed component.

With respect to the method shown in Figure 11, at step 1106, the thermal signature(s) may be examined by comparing the signature(s) to a selected model and, at step 1108, a condition of a component of the powered system may be predicted or diagnosed based on or using this comparison. Different models may have different patterns or combinations of the temperatures, and each model may be associated with a different diagnosed component, a different condition of the diagnosed component, and/or a different cause of the condition of the diagnosed component than one or more, or all, other models.

The associations between the models and the different diagnosed components, different conditions, and/or different causes of the conditions may be determined based on prior examinations of thermal signatures and the conditions of components (e.g., empirically determined). For example, operators may obtain thermal signatures of a powered system, inspect the different components of the powered system, determine conditions of the different components, and then associate the diagnosed components, conditions, and/or causes with one or more of the thermal signature. Over time, if several similar or identical thermal signatures are found to be detected when a particular component has a certain condition created by a discovered cause (e.g., another component), then these thermal signatures can be combined (e.g., averaged or the like) into a thermal model. This model can then be associated with the diagnosed condition of the diagnosed component that is associated with the diagnosed cause.

Optionally, the associations between the models and the different diagnosed components, different conditions, and/or different causes of the conditions may be determined or updated using artificial intelligence and/or machine learning. The diagnostic controller may have a local data collection system deployed that may use machine learning to enable derivation-based learning outcomes. The controller may learn from and make decisions on a set of data (including data provided by the various thermal sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

The diagnostic controller may include a policy engine that may apply one or more policies. These policies may be based at least in part on characteristics of a given item of equipment or environment. With respect to control policies, a neural network can receive input of a number of environmental and task-related parameters. These parameters may include an identification of a condition of a diagnosed component and/or a cause of the condition, thermal data from thermal sensors, etc. The neural network can be trained to generate an output based on these inputs, with the output representing the diagnosed component, cause, and/or an action or sequence of actions to be implemented in response thereto. During operation of one embodiment, a determination can occur by processing the inputs through the parameters of the neural network to generate a value at the output node designating the condition, component, cause, and/or action. This output may translate into a signal that causes the action to be implemented, that notifies an operator, etc. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, the output may be evaluated on their performance using a determined success metric. The best model is selected, and the controller executes that plan to achieve the desired input data to mirror the predicted best outcome scenario. Additionally, the success metric may be a combination of the optimized outcomes, which may be weighed relative to each other.

The controller can use this artificial intelligence or machine learning to receive input (e.g., a thermal signature), select a model that associates components, conditions of components, and/or causes of the conditions with different thermal signatures to identify a component causing the condition, the degree or extent of the condition (e.g., the amount of wear and tear), and/or a cause of the condition, and then provide an output indicating the identified component, the degree or extent of the condition, and/or the cause of the condition. The controller may receive additional input, such as feedback confirming or refuting the identified component that is damaged, the identified condition or degree of the condition of the component, and/or cause of the condition. Based on this additional input, the controller can change one or more of the thermal models, such as by changing which component is identified as the cause of the condition of the same or another component, the degree of wear and tear (or other damage) of the component, etc., that would be selected when a similar or identical input is received the next time or iteration that a thermal signature is compared with the model(s). The controller can then use the changed or updated model(s) again to diagnose a component, component condition, and/or cause of the condition, receive feedback on the diagnosis, change or update the model(s) again, etc., in additional iterations to repeatedly improve or change the model(s) using artificial intelligence or machine learning.

The thermal model that is selected for comparing with the thermal signatures to diagnose a component may be selected from among several different models based on various factors. For example, different models may be associated with different factors, or different combinations of factors. The diagnosis controller can examine characteristics of the powered system, the ambient environment, etc., compare these characteristics to the factors of the models, and select a model based on how closely the characteristics match (or don't match) the factors of the models. Examples of different factors and characteristics include makes and/or models of the powered systems, age or usage histories of the powered systems, maintenance histories of the powered systems (including whether and/or when the last maintenance or inspection of the powered system occurred), a direction of movement of the powered system by the thermal sensors and/or of the thermal sensors by the powered system, an orientation of the vehicle, unique identifiers of the powered systems (e.g., which may be obtained from radio frequency identification (RFID) tags; automatic equipment identification (AEI) tags; user input; optical readers or cameras; etc.), ambient temperatures and/or weather conditions; year of manufacture of the powered system; types of components in the powered system (e.g., alternating current or direct current motors in the powered system), locations or layouts of the components in the powered system, the direction of movement of the powered system relative to the thermal sensors, or the like. For example, one thermal model may be associated with a vehicle moving in a first direction with a unique identifier (that indicates the make/model/year of the vehicle and the component locations), while another thermal model may be associated with a vehicle moving in a different second direction but with the same identifier. Another thermal model may be associated with another vehicle moving in the first direction but having a different identifier. The different models may be stored in the memory of the diagnostic system. More than one model may be selected for comparisons with thermal signatures of a powered system.

The diagnostic controller can compare the thermal signatures to the selected model(s) to determine whether the thermal signatures include one or more of the features in the selected model(s). The features of the model(s) may include temperatures above thresholds, temperatures within (or outside of) ranges, etc., within certain locations or ranges of locations in one or more sets of thermal signatures. Optionally, the features of a model may include temperature comparisons, such as differences between measured temperatures and an ambient temperature, ratios between measured temperatures and ambient temperatures, differences between measured temperatures within a thermal signature, etc., in one or more locations or ranges of locations.

If a thermal signature measured for the powered system has temperatures or temperature comparisons that exceed the thresholds (or that are outside of the ranges) within the same locations or ranges of locations in a selected model, then the diagnosed condition of a component and/or cause associated with that model may be identified by the diagnostic controller as the diagnosis for the component.

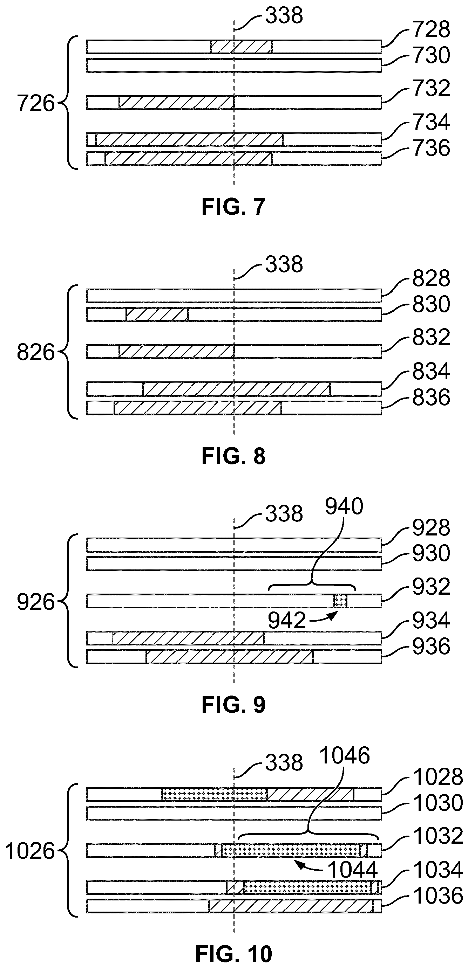

For example, the diagnostic controller can compare the thermal signature of Figure 9 with a selected model. The selected model may associate a measured temperature or temperature comparison that exceeds a designated threshold or is outside of a designated temperature range, that is within a designated segment 940 in the middle set 932 of temperatures, and that does not have elevated temperatures or temperature comparisons in one or more other locations with a faulty or deteriorated electrical cable connected to a traction motor that may be the cause of the abnormal operating condition. In the thermal signature shown in Figure 9, the diagnostic controller may determine that an elevated temperature or temperature comparison 942 in the designated segment without other elevated temperatures or temperature comparisons indicates that a traction motor cable of the powered system (associated with the thermal signature) has an abnormal operating condition (e.g., a sheathing of the cable is torn or worn, or the conductive portion of the cable is exposed).

As another example, the diagnostic controller can compare the thermal signature of Figure 10 with a selected model. The selected model may associate measured temperatures or temperature comparisons that exceed a designated threshold or is outside of a designated temperature range, that appear in the middle set 932 of temperatures of the signature, and that appear behind the axle or marker along a direction of movement of the powered system (e.g., within a designated segment 1046 of the middle set) as indicting that a condition of the thermal management system has deteriorated. If the powered system were moving in an opposite direction, the designated segment may appear on the opposite side of the alignment marker. The diagnostic controller can compare the thermal signature in Figure 10 with this model and determine that elevated temperatures or temperature comparisons 1044 in the middle set behind the alignment marker indicate that the thermal management system is not operating as expected or desired. For example, the diagnostic controller may determine that a fan or blower of the thermal management system is not operating or is not pushing enough cooling air, that a duct or conduit of the thermal management system is blocked, or the like.

Optionally, a thermal model may indicate that elevated temperatures or temperature comparisons in multiple thermal models measured for the same powered system indicate an abnormal operating condition with the thermal management system (rather than individual components such as bearings, motors, etc.). For example, the diagnostic controller can examine measured temperatures or temperature comparisons for the middle sets of thermal signatures measured for multiple, different axles of a vehicle. If these measured temperatures or temperature comparisons exceed a designated threshold (or are outside of a designated temperature range), then the diagnostic controller can determine that these several elevated temperatures or temperature comparisons indicate an abnormal operating condition or state of the thermal management system. Some currently known systems may incorrectly identify several or each of the traction motors as having an abnormal operating condition given the same measured temperatures or temperature comparisons. Conversely, if the diagnostic controller examines measured temperatures or temperature comparisons for the middle sets of thermal signatures for multiple, different axles of a vehicle, but only one of the thermal signatures exhibits elevated temperatures in the middle set, then the diagnostic controller can determine that this indicates that only the traction motor for the thermal signature may have a deteriorated, faulty and/or abnormal condition.

Optionally, the diagnostic controller can examine the thermal signatures and compare the signatures to a model associated with a refrigerated vehicle or cryogenic container. This model may indicate the presence of colder than normal or colder than ambient temperatures in one or more segments of a set in a thermal signature as an indication of abnormal operation. For example, a colder than ambient temperature may indicate that there is a coolant leak or leak of colder air from inside the vehicle. For example, if a thermal signature measured for the refrigerated vehicle shows a temperature or a temperature comparison that is colder than a threshold temperature in a segment of a set of the thermal signature associated with a cooling component (e.g., compressor) or another component. For example, for a compressed air line where there is air leaking the expanding air cools, absorbing heat from the area near the leak. In vehicles that have or use cryogenic fluids, the leak of such fluids, as well as imperfections in the insulation for such fluids, may appear colder than ambient to a system having features according to the invention. In a vehicle system with a liquid fuel tender, as an example, there may be hoses from the vehicle to the tender that couple to a regassification unit. The regassification unit likely has a thermal signature for normal operations, but the hoses (even with insulation) will be either hotter or colder than ambient while in use. This would be detectable by the diagnostic system. Leaks of the cryogenic fluid would be detectable by the diagnostic system.

Other thermal models may be associated with battery cells in a battery stack, fuel cells, pantographs, or the like, of a powered system having a temperature that is warmer than expected. A thermal signature that matches such a model may indicate that the battery cell or fuel cell is in an abnormal operating state, that a motor that raises or lowers the pantograph may be malfunctioning, or the like. In such a system, a check may be run against an operating state of a battery stack (or a compartment holding the same), if not in use, the expected temperature may be about ambient. If recently used, or currently being charged, the battery compartment may have a temperature that is elevated relative to ambient. If the batteries are overcharging or if there is a thermal runaway, or the like, the battery compartment may be at a temperature that is higher than ambient (naturally) and also higher than the expected normal operating temperature associated with the batteries' current states (are they in charging mode and the normal temperature associated with that, or are they in discharge mode and the normal temperature associated with that).

One or more models may be associated with or used to predict impending failure or an abnormal operating condition of one or more components. For example, instead of a model being associated with a component that already has deteriorated, the model may be associated with a predicted failure or other abnormal operating state of a component. If the diagnostic controller identifies a thermal signature or signatures that match the predictive model, then the diagnostic controller can determine that the component associated with the model is expected or predicted to fail and/or enter an abnormal operating state within a designated time period associated with the model.

The diagnostic controller may examine one or more inputs in addition to thermal measurements to identify or predict abnormal operating components. For example, the diagnostic controller may collect or obtain acoustic measurements (e.g., detected sounds), electric signals (e.g., eddy currents, changes in current or voltage, etc.), on-board operating parameters (e.g., speed, horsepower, voltage and current, speed sensor inputs, terrain, weather or ambient conditions, accelerations, input from wayside monitoring devices or systems, etc.), or the like. Different combinations of these inputs can be used in conjunction with the thermal signature to diagnose or predict a condition of one or more components.

Returning to the description of the diagnostic system shown in Figure 1 and the method shown in Figure 11, at step 1110, responsive to identifying an abnormal operating condition of a component, the diagnostic controller may implement one or more responsive actions. For example, the powered system may include a system controller 128 that represents hardware circuitry including and/or connected with one or more processors. The system controller can control operation of the powered system. The diagnostic controller can send a notification signal to the system controller via the communication device of the diagnostic system and a similar communication device 130 of the powered system. This signal may instruct the system controller to notify an operator (or a backend system) of the powered system of the identified condition of a component, an identification of the component, and/or one or more causes of the condition via an input/output device 132 ("I/O Device" in Figure 1). The input/output device can represent a touchscreen, other electronic display, speaker, alarm, lamp, etc.

Optionally, this notification signal may derate the component, or may direct the operator to move or take the powered system to the maintenance system, such as a repair facility. The diagnostic controller may send the notification signal to a maintenance controller 134 of the maintenance system via the communication device of the diagnostic system and a similar communication device 136 of the maintenance system. This notification signal can inform the maintenance controller of the condition of the component and identify the powered system. The maintenance controller can use this information to generate repair or maintenance orders for personnel, order parts for repair or maintenance, or the like, to ensure that the maintenance system is ready to perform repair or inspection when the powered system arrives.

The notification signal can be sent to the system controller and direct the system controller to automatically implement one or more responsive actions. As one example, the notification signal may direct the system controller to reduce operation of one or more components, such as by de-rating an engine, cutting out a motor (e.g., shutting down the motor while one or more other motors continue operating), reducing a maximum allowable torque of the motor, reducing a set temperature of a cooled compartment in the powered system, stop using dynamic braking (e.g., due to the abnormal operating condition being identified and associated with a resistive grid), cutting out a battery cell (e.g., by opening switches connected to the battery cell), or the like. Optionally, the notification signal can direct the system controller to change movement of a vehicle, such as by controlling the propulsion system to move the vehicle to another route (e.g., to avoid difficult terrain, to avoid congested areas, to shorten the trip of the vehicle, to move the vehicle to the maintenance system, etc.).

The notification signal may be sent to a system controller 138 of the control system via the communication device of the diagnostic system and a similar communication device 140 of the control system. The system controller can represent hardware circuitry that includes and/or is connected with one or more processors. The system controller can receive the notification signal and perform one or more responsive actions. For example, the system controller can send signals to other vehicles informing the other vehicles of the abnormal operating condition of the diagnosed powered system, can change a scheduled or planned route of the powered system and/or the other vehicles to avoid each other or direct the powered system to the maintenance system, or the like.

**In** one example, the notification signal can be used to control different components of the powered system to avoid using the component(s) associated with the detected defect or fault, and/or to compensate for the defective or faulty component(s). For example, braking a vehicle in a multi-vehicle system having a defect associated with a wheel, axle, or brake (e.g., a bearing with an elevated temperature, a wheel with an elevated temperature, an axle with an elevated temperature, a brake with a missing brake shoe, etc.) can increase the risk of an accident (such as derailment, rollover, etc.) of the vehicle or vehicle system.

For example, the diagnostic controller can send a signal to the system controller to notify the system controller of a defect or fault, as described above. This communication can occur directly from the diagnostic system to the powered system. Optionally, the signal may be sent to a third party or location (such as the off-board control system or the off-board maintenance system), which then sends the same signal or another signal to the powered system (to inform the powered system of the defective or faulty component).

The signal can inform the system controller of the defect that is detected, as well as the location of the component associated with the defect. For example, in a vehicle system having forty vehicles, the notification signal from the diagnostic controller to the system controller can inform the system controller that a bearing, wheel, axle, or brake on the twentieth vehicle (from the front of the vehicle system along a direction of movement of the vehicle system) has an elevated temperature (indicative of a defect, as described herein). The diagnostic controller can identify which component has the detected fault or defect by counting the number of components that are examined during passage of the powered system by or over the sensor(s) of the diagnostic system, by scanning or reading identifiers printed on the components, or the like.

The system controller can then implement one or more responsive actions. For example, during a subsequent braking event where the brakes of the powered system are applied to slow or stop movement of the powered system, the system controller can direct the brakes to be engaged but exclude the brake associated with the identified defect to not engage. The other brakes of the powered system can be engaged, but the brake that would otherwise engage the wheel having the elevated temperature that is detected, the wheel connected to the axle having the elevated temperature that is detected, the brake having the missing brake shoe that is identified (e.g., based on an elevated temperature that was measured from prior braking of the brake having the missing brake shoe), etc., is not engaged.

When an application is required, it would exclude that specific car from the brake application request. In one example, the brakes of the powered system may be electronically controlled pneumatic (ECP) brakes that are electrically controlled by sending signals to the ECP brakes, which then pneumatically control the brakes to engage or release based on the signal that is received. The system controller can individually control which of these brakes are engaged or released at different times by controlling which signals are sent to which brakes at different times. This can allow for the systems described herein to proactively send information indicative how many operative components (e.g., brakes, wheels, bearings, axles, etc.) and/or inoperative components are onboard the powered system. This also can allow for the systems described herein to know changes in operational capability of the powered system and to adjust (e.g., compensate) for these changes.

For example, if a brake is no longer able to be used because of a missing brake shoe, an overheated wheel, an overheated axle, or the like, then the system controller can prevent that (and only that) brake from being controlled to be engaged until the brake is able to be repaired. As another example, the system controller can change the braking effort generated by one or more other brakes (that are still fully functional or that are not identified as defective or faulty) to compensate for the defective brake. This can involve increasing the brake effort generated by one or more brakes above and beyond what would otherwise be generated by those brakes. For example, if a brake on a rail car is identified as defective or faulty, then the system controller can command an increased braking force from another brake on the same car, another brake on a rail car that is next to the rail car with the defective or faulty brake, or other brakes on the rail cars on both sides of the rail car with the defective or faulty brake. The ECP brake application command used to actuate these brakes can be increased to increase the effort generated by those brakes to slow or stop the vehicle system, and to compensate for the loss in braking effort that would have been provided by the defective or faulty brake.

**In** another example, the system controller can change the timing at which one or more other brakes are actuated to compensate for the defective brake. This can involve applying the brakes earlier than when the brakes otherwise would have been applied but for the defective or faulty brake. For example, if a brake on a rail car is identified as defective or faulty, then the system controller can apply another brake on the same car, another brake on a rail car that is next to the rail car with the defective or faulty brake, or other brakes on the rail cars on both sides of the rail car with the defective or faulty brake at time that are earlier than when the brakes would have been applied if the brake were not identified as faulty or defective.

In another example, the system controller may include or may use one or more energy management systems or software applications that calculate trip plans for the vehicle system. These systems or applications may be stored internally at the system controller or in the memory that is accessible by the system controller. The trip plans may designate operational settings (e.g., throttle settings, speeds, brake settings, etc.) at different locations, times, distances, etc. of a trip of the vehicle system. The operational settings may be selected or calculated to reduce fuel consumed by the vehicle system, emissions generated by the vehicle system, audible noise generated by the vehicle system, electric energy consumed by the vehicle system, or the like, relative to the vehicle system traveling according to other, different operational settings.

The system controller can be controlling (autonomously or by issuing instructions to a manual operator) the vehicle system according to the trip plan. Upon detection of a component that has failed, is faulty, or otherwise exhibiting undesirable elevated temperatures (as described herein), the system controller can change the trip plan to compensate for the loss in this component. For example, the system controller can change the trip plan to stop activating the component detected to be failed, faulty, or otherwise have elevated temperatures, to cause other components to increase output (e.g., braking effort), to cause other components to operate sooner (e.g., begin braking sooner), or the like, when compared to the prior trip plan or the trip plan prior to detecting the component to have failed, be faulty, or otherwise overheated.

Optionally, the powered system may be formed from two or more separate vehicle systems, with each of the vehicle systems formed from a single vehicle or two or more vehicles connected together. Several system controllers may be onboard the separate vehicles, and can communicate with each other to coordinate movements. This can involve pacing the different vehicle systems by changing throttle settings and/or brake settings to keep or maintain the spacing between the vehicle systems. For example, responsive to detecting that a brake shoe in a first vehicle system no longer being present (or is worn down), one or more of the system controllers can direct the vehicle systems ahead of and/or behind the first vehicle system to slow down to account for the decreased braking capability of the first vehicle system. This can allow the vehicle systems to continue safely moving in spite of the failed or faulty brake component of the first vehicle system. In another example, one or more of the system controllers can direct the first vehicle system to mate or couple with another vehicle system ahead of or behind the first vehicle system (e.g., using a coupler) so that the first vehicle system and the other vehicle system combine to form a larger vehicle system that can travel together.

Several different responsive or compensatory actions that are implemented in response to detecting a failed or faulty component are described herein. The system controller can select which of these actions to implement based on one or more factors or characteristics. As one example, the action can be selected based on the size of the powered system. Powered systems that are heavier and/or longer may require braking begin earlier and/or with more braking effort (e.g., bigger pressure drops to apply the air brakes, larger retardant forces applied to the wheels, etc.) when compared to lighter and/or shorter powered systems. Consequently, the system controller can determine the size of the powered system (e.g., from operator input, a default value, and/or from a manifest stored in a memory) and use artificial intelligence or machine learning to select which other brakes to apply, when to apply the brakes, and/or how much effort to apply with the brakes responsive to detecting a faulty or failed brake. As another example, data indicative of different sizes of powered systems may be stored in the memory accessible by the system controller, along with data indicating earlier times to initiate braking and/or increased braking effort amounts. The vehicle controller can reference this data to select an earlier time and/or an increased braking effort to use when controlling the brakes responsive to detection of a faulty or failed brake.

As another example, the action can be selected based on a type of cargo being carried by the powered system. Powered systems transporting hazardous cargo (e.g., cargo that is flammable, explosive, corrosive, toxic, radioactive, infectious, under increased pressure, etc.) and/or passengers (other than the operator of the powered system) may require braking begin earlier and/or with smaller changes in brake settings when compared to powered systems that are not transporting hazardous cargo or passengers. The smaller changes in brake settings can include limiting how much braking can change (e.g., no more than a designated change) to prevent sudden stops that may risk spilling or leaking the cargo, or making passengers uncomfortable.

Consequently, the system controller can determine the cargo of the powered system (e.g., from operator input, a default value, and/or from a manifest stored in a memory) and use artificial intelligence or machine learning to select which other brakes to apply, when to apply the brakes, and/or how to change the brake settings responsive to detecting a faulty or failed brake. As another example, data indicative of different cargos may be stored in the memory accessible by the system controller, along with data indicating earlier times to initiate braking and/or limit on changes in brake settings. The vehicle controller can reference this data to select an earlier time and/or smaller changes in brake settings to use when controlling the brakes responsive to detection of a faulty or failed brake.

**In** another example, the system controller can change braking in one or more separate powered systems responsive to detecting an overheated, faulty, or failed brake. Figure 12 illustrates one example of several powered systems 1200A-C. Each of the powered systems can represent the powered system shown in Figure 1. The powered systems may each be formed from a single vehicle 1202 or two or more vehicles. The powered systems formed from a single vehicle may include a propulsion-generating vehicle having one or more motors, engines, or the like, for propelling the powered system. The powered systems formed from multiple vehicles may include at least one propulsion-generating vehicle and optionally at least one non-propulsion-generating vehicle 1204, such as a trailer, rail car, or the like. Each of the vehicle systems shown in Figure 12 may include or represent at least one powered system 102 shown in Figure 1.

Several system controllers may be onboard the separate powered systems. These system controllers can communicate with each other to coordinate movements of the separate powered systems. This can involve pacing the different systems by changing throttle settings and/or brake settings to keep or maintain a spacing distance or separation distance 1206 between the vehicle systems. For example, responsive to detecting that a brake shoe in a first vehicle system no longer being present (or is worn down), one or more of the system controllers can direct the vehicle systems ahead of and/or behind the first vehicle system to slow down to account for the decreased braking capability of the first vehicle system. This can allow the vehicle systems to continue safely moving despite the failed or abnormal brake component of the first vehicle system.

The system controller(s) can maintain the separation distance between the vehicle systems on either side of (e.g., ahead of and behind) the vehicle system having the failed or abnormal brake. For example, responsive to identifying an abnormal brake onboard the vehicle system 1200B, the system controller(s) onboard the vehicle system 1200A, 1200B, and/or 1200C can control movement of the vehicle systems to maintain the separation distance between the vehicle system 1200A and the vehicle system 1200B, and to maintain the separation distance between the vehicle system 1200B and the vehicle system 1200C. The separation distance may be maintained when the separation distance does not vary by a designated threshold (e.g., 10%, 25%, or 30% in different examples) and/or when the separation distance does not shrink below a lower threshold distance and does not grow longer than an upper threshold distance. The system controller of the vehicle system 1200A may slow down the vehicle system 1200A to keep the vehicle system 1200A farther from the vehicle system 1200B (without exceeding the designated threshold change in separation distance or shrinking below the lower threshold distance) and/or may speed up the vehicle system 1200C to keep the vehicle system 1200C farther from the vehicle system 1200B (without exceeding the designated threshold change in separation distance or shrinking below the lower threshold distance). This can compensate for the decreased braking capability of the vehicle system 1200B (by keeping the vehicle systems 1200A, C farther from the vehicle system 1200B).

**In** another example, the system controllers can direct the vehicle system having the abnormal brake or component to mate or couple with another vehicle system. For example, the system controller of the vehicle system 1200B may speed up or slow down the vehicle system to engage and mate the vehicle system 1200B with the vehicle system 1200A and/or the vehicle system 1200C. The vehicle systems may have couplers 1208 on front and/or trailing ends of the vehicle systems that can automatically mate with and couple the vehicle systems together. This can attach the vehicle system 1200B with the vehicle system 1200A and/or the vehicle system 1200C to that a larger vehicle system is formed. This larger vehicle system may have increased braking capability (relative to the vehicle system 1200B alone).

In one example, according to the claimed invention, a method is provided that includes obtaining a thermal signature for one or more first components of a powered system, the thermal signature representing thermal measurements obtained at different locations of the powered system, and identifying an abnormal operating condition of the one or more first components of the powered system or one or more second components of the powered system based on the thermal signature.

The method includes determining a cause of the abnormal operating condition based on the thermal signature. The cause of the abnormal operating condition is determined to be the one or more second components of which the thermal measurements were not obtained. The abnormal operating condition may be identified by examining the thermal measurements associated with traction motors of the powered system and the cause may be determined to be a thermal management system of the powered system. The abnormal operating condition may be identified by examining the thermal measurements associated with traction motors of the powered system and the cause may be determined to be an electric cable of at least one of the traction motors. The abnormal operating condition may be identified by examining the thermal measurements associated with a pantograph of the powered system and the cause may be determined to be a motor that raises or lowers the pantograph. The abnormal operating condition may be identified by examining the thermal measurements associated with a thermal management system of the powered system and the cause may be determined to be a coolant leak of the powered system.

The thermal signature may be obtained from one or more thermal sensors disposed in, on, or along a route that the powered system moves. The thermal signature may be obtained from the thermal measurements obtained by the one or more thermal sensors during a single pass of the powered system over or by the one or more thermal sensors. The thermal signature may represent the thermal measurements obtained at the different locations beneath the powered system.

The thermal signature may include the thermal measurements of two or more of a traction motor, a u-tube, an axle, or a motor bearing. The abnormal operating condition may be identified by comparing the thermal signature to one or more thermal models that represent different combinations of the thermal measurements associated with different ones of the one or more first components and associated with different extents of the abnormal operating condition.

The method may include selecting the one or more thermal models from several more thermal models based on one or more characteristics of the powered system. The one or more characteristics may include one or more of a make and model of the powered system, an identification of the powered system, a usage history of the powered system, a maintenance history of the powered system, a manufacturing year of the powered system, a type of motor in the powered system, locations or layouts of the one or more first components in the powered system, or a direction of movement of the powered system while the thermal measurements were measured.

The method may include selecting the one or more thermal models from several more thermal models based on one or more ambient conditions. The different combinations of the thermal measurements of the one or more thermal models may include temperature comparisons. The temperature comparisons may include differences between measured temperatures and an ambient temperature. The temperature comparisons may include ratios of measured temperatures and an ambient temperature. The temperature comparisons may include averages or medians of measured temperatures.

In another example, a diagnostic system is provided that may include a controller that obtains a thermal signature for one or more first components of a powered system. The thermal signature may represent thermal measurements obtained at different locations of the powered system. The controller may identify an abnormal operating condition of the one or more first components of the powered system or one or more second components of the powered system based on the thermal signature.

The controller may determine a cause of the abnormal operating condition based on the thermal signature. The controller may determine the cause of the abnormal operating condition as the one or more second components of which the thermal measurements were not obtained. The controller may identify the abnormal operating condition by examining the thermal measurements associated with traction motors of the powered system and the controller may determine the cause to be a thermal management system of the powered system.

The controller may identify the abnormal operating condition by examining the thermal measurements associated with traction motors of the powered system and the controller may determine the cause be an electric cable of at least one of the traction motors. The controller may identify the abnormal operating condition by examining the thermal measurements associated with a pantograph of the powered system and the controller may determine the cause to be a motor that raises or lowers the pantograph.

The controller may identify the abnormal operating condition by examining the thermal measurements associated with a thermal management system of the powered system and the controller may determine the cause to be a coolant leak of the powered system. The controller may obtain the thermal signature from one or more thermal sensors disposed in, on, or along a route that the powered system moves. The controller may obtain the thermal signature from the thermal measurements obtained by the one or more thermal sensors during a single pass of the powered system over or by the one or more thermal sensors.

The thermal signature may represent the thermal measurements obtained at the different locations beneath the powered system. The thermal signature may include the thermal measurements of two or more of a traction motor, a u-tube, an axle, or a motor bearing. The controller may identify the abnormal operating condition by comparing the thermal signature to one or more thermal models that represent different combinations of the thermal measurements associated with different ones of the one or more first components and associated with different extents of the abnormal operating condition. The controller may select the one or more thermal models from several more thermal models based on one or more characteristics of the powered system.

The one or more characteristics may include one or more of a make and model of the powered system, an identification of the powered system, a usage history of the powered system, a maintenance history of the powered system, a manufacturing year of the powered system, a type of motor in the powered system, locations or layouts of the one or more first components in the powered system, or a direction of movement of the powered system while the thermal measurements were measured.

The controller may select the one or more thermal models from several more thermal models based on one or more ambient conditions. The different combinations of the thermal measurements of the one or more thermal models may include temperature comparisons. The temperature comparisons may include differences between measured temperatures and an ambient temperature. The temperature comparisons may include ratios of measured temperatures and an ambient temperature. The temperature comparisons may include averages or medians of measured temperatures.

Embodiments of the subject matter described herein also relate to systems and methods that allow for the communication or acquisition of data from devices that may not have regular or consistent connections to communication networks, as well as the communication and/or use of that data to or by other systems for diagnosis of the devices, control of the devices, control of other systems, etc. In one example, the system and methods may use already installed system components onboard many, if not almost all, rail vehicle systems traveling in the United States. Suitable system components may include the I-ETMS positive train control system, Trip Optimizer system (both available from Wabtec Corporation), electronically controlled pneumatic brake systems, and the like. These vehicle systems may have a wireless interface (e.g., WiFi), which may be used to upload the data obtained from wayside devices once the vehicle systems reach a vehicle yard (e.g., rail yard) or other location that has a consistent or reliable connection to a communication network (e.g., MESH, LAN, WAN). A suitable controller may be integrated with or communicatively couple to other local or interchangeable database management systems, such as the InteRRIS system, EHMS, UMLER, or other similar systems. Trademarks belong to their respective owners.

The diagnostic system may include a communication device such as a WiFi access point at the wayside device on a data recorder. This communication device can allow the communication device onboard the vehicle system (e.g., the WiFi interface) to connect to the data recorder and upload the data of the wayside device to the vehicle system. The vehicle system then moves that data over the existing upload interface to the back office prior to reaching a vehicle yard or upon arriving at the vehicle yard. Optionally, a communication device that includes a WAN circuit or a modem plus a cellular subscription, may be installed at the wayside device to allow the wayside device to upload the data to the back office system without having to first communicate the data to the vehicle system. In one embodiment, plural wayside devices are installed at periodic intervals along the route, and each has a communication device that is configured to communicate at least as far as needed to contact the wayside device on either of its sides along the route. The wayside devices may then establish a network, such as a mesh network, in place of or in addition to, any other communication pathways available to the wayside devices.

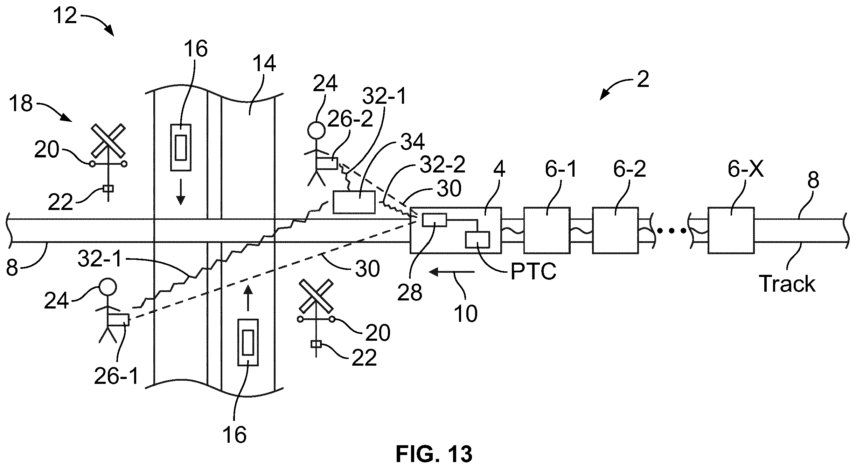

With reference to Figure 13, in one embodiment, a powered system 2 includes a powered vehicle 4 (e.g., a propulsion-generating vehicle) and may include any number of non-powered cars 6-1-6-X (including zero cars, such as non-propulsion-generating vehicles). The powered vehicle may be considered as the master or lead vehicle of the train and the rail car 6-X is the last vehicle of the vehicle system and may be a trail unit or slave. Depending on the application, the vehicles can be positioned in the vehicle system, the direction of travel of the vehicle system may change (thus reversing the lead and trail designation).

In the example shown in Figure 13, the vehicle system is traveling on a route 8. The route in this example is a rail the route in a direction of arrow 10 toward an at-grade crossing 12. In one embodiment, the crossing can be the intersection of rail tracks and a road or roadway 14 on which one or more other vehicles 16 can travel. Other permutations that are not shown may include crossing roads, crossing tracks, a road and track crossing, more than two routes crossing, one of the routes being a pedestrian route, and the like. In some embodiments, travel into or through a segment of the route (that may or may not include a crossing) is interchangeable with a crossing as discussed here.

In one embodiment, the crossing or route segment can have a co-located health and warning wayside system 18. This wayside system can represent one or more embodiments of the diagnostic systems described herein. In one embodiment, the wayside system can include some or all of the following: one or more visual indicators 20, an audible indicator 22, a selectively deployable physical barrier, a communication device, and a sensor package. A suitable visual indicator may include a light, such as a red light, an illuminating arrow, illuminated text information, and other graphics. A suitable audible indicator may be a bell, a speaker, a siren, and the like. A suitable barrier may be a crossing gate. The wayside system may operate such that when the vehicle system is a first distance from the crossing, the visual indicators can commence flashing and the audible indicator can commence sounding. When the vehicle system moves to a second, closer distance to the crossing, any crossing gates of wayside system can lower at least partially across the roadway to block the travel of vehicle(s) over the route. In one embodiment, the flashing of visual indicators and the sounding of audible indicator can, in an example, be activated about thirty seconds before the vehicle system arrives at the crossing, assuming the vehicle system is traveling at rated track speed. In one embodiment, any optional crossing gates of wayside system can be lowered in a determined amount of time, such as about fifteen to twenty seconds before the vehicle system arrives at the crossing, again assuming the vehicle system is traveling at rated track speed. If a train is traveling at a greater than or less than a rated track speed, the time visual indicators and audible indicator are activated and/or time optional crossing gates are lowered before the vehicle system arrives at the crossing may be decreased or increased accordingly.

Other wayside system components may include various detectors and sensors, as discussed further herein, and may include a communication device that can transmit information to a back office system, one or more vehicles in the vehicle system, personnel located nearby, other wayside devices, and the like. The wayside device may be located distal to a crossing. The location may be along a length of the route, at some item of infrastructure along the route, and the like. Infrastructure may include the crossing or intersection, discussed in detail, and may include bridges, tunnels, switches, and the like.

**In** one embodiment, when the wayside system or a part thereof malfunctions, one or more human repair crew, line crew, ground crew, inspectors, and/or flaggers 24 (collectively referred to as line crew) may be stationed or positioned at or proximate the crossing. A flagger may help the vehicles move safely across the route. A member of the line crew may carry a portable wireless communication device 26 that the line crewman may use to wirelessly communicate data to a wireless receiver or transceiver 28 provided on-board a vehicle. This may be done directly via a wireless communication channel 30 between the portable communication device and onboard communication device, or indirectly via a wireless communication channel 32 that uses a wireless wayside transceiver communication device 34. In an example, the wireless communication channel between the portable communication device and wireless onboard communication device can include a first portion 32-1 between the portable communication device and wireless wayside transceiver, and a second portion 32-2 between wireless wayside transceiver and wireless onboard communication device.

Where two or more wireless devices communicate data with wireless onboard communication device via the wayside communication device, second portion 32-2 of the communication channel can include data included on the first portion 32-1 of the communication channel output by each portable communication device. That is, the wayside communication device can transform, check, and communicate the data from two or more wireless devices to onboard communication device, which can recognize the data being transmitted by each portable communication device separately from each other the portable communication device. Other features may include validation checks, encryption/decryption, authentication checks, and the like.

In one embodiment, the particular wireless protocol utilized for the first portion 32-1 of the channel can be selected. In one embodiment, the wireless protocol can be WiMAX, a wireless local loop (WLL), a Zigbee wireless mesh network, Bluetooth, and the like. However, this is not to be construed in a limiting sense since it is envisioned that any suitable and/or desirable wireless protocol may be utilized for communication between the wayside communication device and each portable communication device.

In one embodiment, where the channel is used by the portable communication device to communicate directly with wireless onboard communication device, the channel can, in an example, include one or more frequencies at a sufficient power level to enable communication when wireless onboard communication device is at least the first distance away from the crossing. In an example, this first distance can be a distance where the vehicle system traveling at rated track speed toward the crossing is about 30 seconds away from the crossing. In one embodiment, the frequencies utilized by the channel can include at least a portion of the VHF radio spectrum, and, more particularly, frequencies from 220 MHz to 225 MHz. In one embodiment, the channel, the channel, first portion 32-1 of the channel, and/or second portion 32-2 of the channel can be implemented via a cellular telephone network. In this example, one, or two, or more of the wayside communication device, a first transceiver 60, and/or a second transceiver 74 can be realized by a cellular radio. Suitable transceivers can be radio frequency (RF) capable.

In one embodiment, where each of two or more wireless devices are deployed proximate the crossing, each portable communication device can be programmed or configured with a unique identifier that enables wireless onboard communication device to distinguish a signal output by the portable communication device from a signal output by another the portable communication device. In this way, each signal output by each portable communication device on the channel and/or the channel can include the unique identifier from which wireless onboard communication device can determine which the portable communication device output the signal from each other the portable communication device that may be able to communicate with wireless onboard communication device.

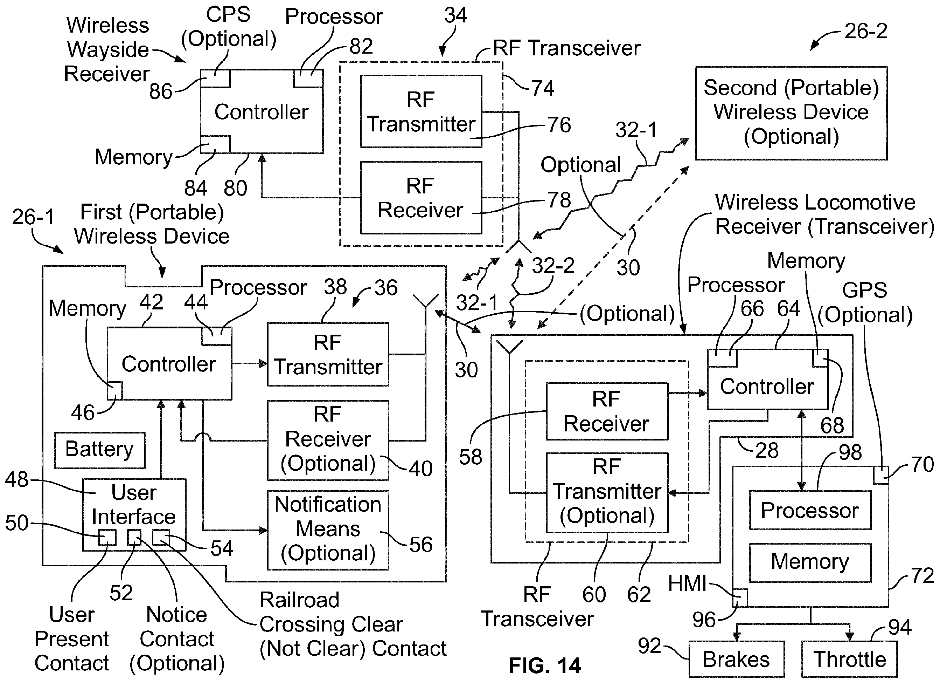

With reference to Figure 14 and with continuing reference to Figure 13, in one embodiment a vehicle control system in accordance with an embodiment of the inventive subject matter can include the first portable communication device 26-1 and an optional the second portable communication device 26-2. The line crewman can be equipped with or carry the portable communication device. In one embodiment, each portable communication device can include a transmitter 38 and an optional receiver 40. The transmitter and receiver, when provided together, can comprise an RF transceiver that functions as a communication device 36.

In one embodiment, each communication device can include or can communicate with a controller 42. The controller may include one or more processors 44 and memory 46. This controller can represent the diagnostic controller described herein. A suitable communication device can have a user interface 48 or human machine interface (HMI) coupled to provide user input to the controller from a line crewman utilizing the portable communication device. In one embodiment, the HMI can include a "user present" contact or switch 50, an optional "notice" contact or switch 52, and a "crossing clear" contact or switch 54. In one embodiment, each portable communication device can include a notification device 56. A suitable notification device can be a visual indicator, a haptic feedback device, a speaker, and the like.

In one embodiment, wireless onboard communication device can include a receiver 58 and a transmitter 60 that, provided together, can define a transceiver 62 that in turn can be a wireless onboard communication device. The onboard communication device can include a controller 64. The controller can include one or more processors 66 and a memory 68. This controller can represent the system controller described above. The controller can, among other things, demodulate data from received signals and can communicate with a vehicle controller 72, which can have a processor 98, memory, and a navigation device 70, such as a global navigation satellite system (GNSS) receiver (e.g., a global positioning system (GPS) receiver).

The vehicle controller can directly or indirectly control whether the vehicle travels through the crossing and, if so, a speed that the vehicle travels through the crossing. Direct control can include the vehicle controller, with or without operator intervention, allowing or disallowing the vehicle to travel through the crossing (a Movement Authority).

Indirect control may take the form of one or more signals or notifications output to an operator of the vehicle, via, for example, a human machine interface (HMI) 96 of the vehicle controller, that the vehicle is permitted or not permitted to travel through the crossing and, when the vehicle is permitted to travel through the crossing, a permitted speed that the vehicle may cross the crossing (a Bulletin). The operator can then respond to the signals or notifications by controlling the vehicle accordingly. In one embodiment, the HMI may include notification devices and input devices. The features of the HMI can be selected based on end use parameters and operator needs. The controller may prioritize HMI messages based on determined message characteristics. If a wayside device uses a sensor package to measure an operating parameter of a vehicle, and that measurement is outside of a determined operating range, the controller may both signal the vehicle operator, and may prioritize the signal regarding the operating parameter relative to other signals that the operator may be receiving. The controller may request an acknowledgement of receipt of the signal by the operator. If an acknowledgement is not forthcoming, the controller may escalate the signaling attempt in order to prompt acknowledgement, and/or may initiate other responsive actions. In one embodiment, the controller may signal the vehicle operator through a radio with an audible notice. The controller may construct a digitized verbal message, or may generate some other warning tone, to convey information regarding the wayside device having detected an anomalous operation of the vehicle. Of note, that the use of the term vehicle operator and vehicle here, and throughout, does not imply that the vehicle operator is onboard the vehicle that is being scanned by the wayside device. In one embodiment, the vehicle operator may be disposed in a locomotive while the vehicle in question is a railcar elsewhere in the train pulled by the locomotive.

With regard to visual indicia for the HMI, the wayside device's signal may manifest as a value, an icon, or the like on a display screen used by the vehicle operator. The indicia may be controlled so that anomalous behavior is highlighted, or an attention-grabbing effect is used (flashing signals, increased font size and weight, color changes, and the like). In one embodiment, non-anomalous behavior may be noted, and this may indicate further a 'freshness' of the data using time, location, and the like. Trend data for the measurements may be available to the vehicle operator through the HMI.

Referencing a route database, and the database having determined profiles along segments of the route, the controller may determine that a current measurement of an operating characteristic of a vehicle may require a responsive action on the part of the vehicle prior to transitioning into a new route segment having a different profile than the one in which the operating characteristic was measured. For example, a vehicle traveling at 20 MPH (32.19 km/h) in a speed limit zone of 20 MPH (32.19 km/ h) may have a bearing detected at an elevated, but not critical, temperature. The controller may interact with the track database and determine that an upcoming segment of track has a speed limit of 50 MPH (80.47 km/h). The controller may respond, for example, by signaling the vehicle to continue to maintain its speed at 20 MPH (32.19 km/h) even when transitioned into the route segment with the higher (50 MPH (80.47 km/ h)) speed limit. In one embodiment, the controller issues a Bulletin to restrict speed until the thermal anomaly is cleared (e.g., by visiting a maintenance shop). In another example, the controller may consult the track database and learn that an upcoming route segment has an increased grade, various curves, a low track health, or some other aspect that may cause a vehicle operating with sensed anomaly to be unable to successfully navigate the upcoming route segment, even if it is able to navigate the current route segment.

In one embodiment, the wayside communication device (communicatively coupled to the wayside device) can be positioned proximate the route and can include a controller 80, which may have a processor 82, a memory 84, and navigation device 86. The controller may perform one or more of: modulate/demodulate and/or encrypt/decrypt signals, transform data protocols, check validity of the information, check authenticity of the information, and determine whether certain monitored parameters have values within determine threshold value limits. In one example, the communication device may query the type of vehicle and/or the type of communication protocol that would work with the vehicle, and then the communication device may transform or translate information, possibly even instruction sets, into a communication protocol effective for the vehicle prior to sending the information to the vehicle.

During operation of the vehicle control system shown in Figure 14, the first portable communication device 26 can be used by a line crewman who is positioned proximate the crossing. In another example, a plurality of wireless devices (26-1, 26-2) can be controlled by a plurality of line crewman positioned proximate the crossing.

In one embodiment, the portable communication device can transmit data that the crossing is clear, or not clear, for the passage of the vehicle through the crossing. In one example, the system may treat the crossing as 'not clear' unless and until receiving an affirmative signal otherwise. In one embodiment, the communication device can receive the data transmitted by another communication device, and the received data can be provided to the vehicle controller. The vehicle controller may determine whether to control the vehicle to travel or not to travel through the crossing or over a route segment based at least in part on the received data.

In an example, if the data received by the vehicle controller from the vehicle communication device indicates that the crossing or route segment is clear for the passage of the vehicle therethrough, the vehicle controller can directly or indirectly control the vehicle to travel through the crossing or route segment. Prevention of the vehicle from traveling through the crossing may include withholding a Movement Authority, applying the vehicle brakes, by reducing or eliminating the power applied by an engine of the vehicle, or a combination thereof. With reference to the application of brakes, the controller may prevent application of brakes in certain circumstances. And, with ECP, the controller may prevent application of brakes in a particular car that has been determined to have an operating characteristic outside of a determined range. In one embodiment, the controller may determine to use friction brakes, dynamic braking, or both based at least in part on the nature of the detected anomaly, the degree of severity of the detected anomaly, the grade or terrain, environmental factors, the speed of the train, the amount or type of cargo in railcars in the train, the type of locomotive (or locomotives if in a distributed power set up), the placement of the railcar with the detected anomaly in the train, the placement of the locomotives in consist in the train, and the like. In a distributed power system, the controller may determine to brake one locomotive differently relative to another in the consist. The controller may choose to use one type of braking in one locomotive, and another type of braking (or no braking) in another locomotive in the consist. The controller may choose to apply braking at different times, at different rates, and with different rail vehicles.

In one embodiment, where the vehicle controller determines that at least one portable communication device is transmitting data that the crossing or route segment is clear for the passage of the vehicle therethrough and the vehicle is in good working order, the vehicle controller can allow or cause the vehicle to travel through the crossing or route segment. The instruction may be to proceed at less than rated track speed (a Bulletin). There may be information about the crossing or route segment, such as the presence of standing water; degradation of track, ballast, or grade; the proximity of maintenance crews, and the like. In one embodiment, where the vehicle controller receives data.

In one embodiment, the portable communication device can include the HMI functionality such that pressing a single button indicates one or more of: there is a person present; a crossing is clear; a crossing is occupied; a route segment is clear; a route segment is occupied; a route segment is damaged; a route segment is impassable; a route segment warning to go slow; and the like. Variations and permutations can be selected with reference to end use requirements. As an example, a line crewman can indicate to the vehicle controller his presence in the crossing by activating the user present button of the portable communication device. Moreover, in an example, when the line crewman determines, e.g., via visual observation, that the crossing is clear for the passage of the vehicle to pass therethrough, said line crewman can actuate the crossing clear button of the portable communication device. In one embodiment, the portable communication device is detected by a wayside system, which automatically makes the call to stop or slow an incoming vehicle. There may be an override function on the portable device that can be accessed by the line crewman. The route segment, or crossing, may be substantially smaller than the block of route for which a Movement Authority from a back office system may grant permission to travel. In one embodiment, a determined short distance along the route segment (such as near a crossing) may be the only location for which the "user present" function would slow or stop the vehicle system's travel.

In an example, upon receiving data that the user present button and the crossing clear button of only a single the portable communication device present proximate the crossing are both activated, the vehicle controller can slow the vehicle through the crossing at less than rated track speed or stop the vehicle altogether. A vital approach takes the failsafe method, where the behavior of the vehicle (under the influence of the vehicle controller) acts in a manner designed to enhance safety and the vehicle does not advance unless safety is assured. In the case of a conflict with one portable device signaling clear, and another signaling that a line crewman is present, the vehicle would resort to a safe posture of not advancing.

In one embodiment, when first and second wireless devices may be positioned proximate the crossing, the portable devices can communication with each other directly or via wayside system (which may act as a signal router, booster, etc.). In an example, the first and second portable devices can respond to a line crewman activating the notice button on of one the portable communication device and the portable communication device can output a wireless notice or alert that can be received by another portable communication device. This may be used to notify other line crewman in the area.

In one embodiment, the distance can be determined by the vehicle controller with reference to GNSS or GPS data from the navigation device. By comparing the present location of the vehicle to a track database it may be possible to determine distance to a crossing (or route segment) and a time of arrival there at based at least in part upon the speed of the vehicle. The track database may include a map of the route that is used by the vehicle controller to track the movement of the vehicle system on the route. The map of the route may include coordinates of at least some objects on or proximate to the route, including for example, the coordinates of the crossing.

In another example, the wayside communication device can be positioned proximate the crossing or route segment, and the distance between the vehicle and the crossing or route segment can be based on coordinates determined from GPS data output and the known coordinates of the wayside system, such as a balise or other beacon.

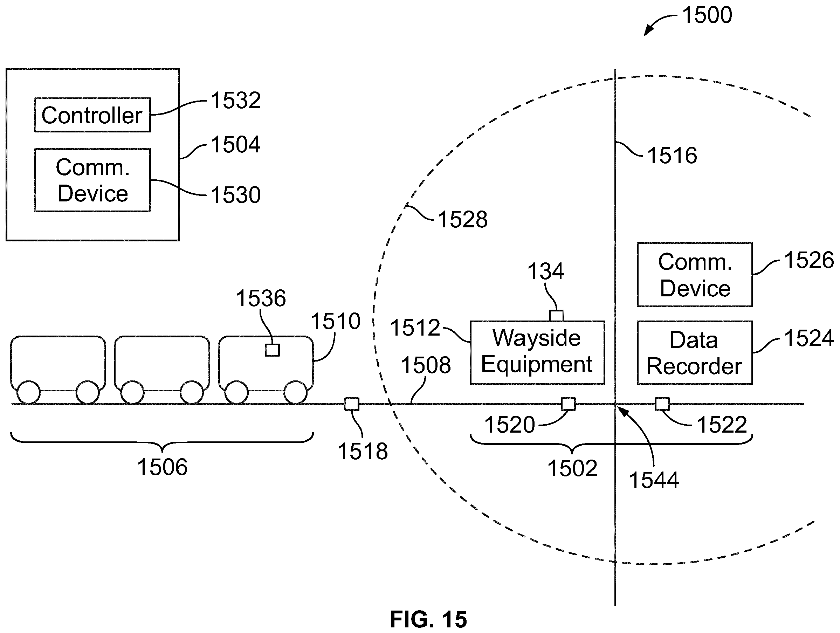

Figure 15 is a diagram that illustrates an example of a wayside device monitoring system or diagnostic system 1500 according to the inventive subject matter. The monitoring system can represent the diagnostic system described above. The monitoring system can allow for data to be collected by a wayside device 1502 and communicated to a remote system 1504 that is remotely located from the wayside device via one or more vehicle systems 1506 (e.g., powered systems described herein). In one example, the remote system may be a back office system. Suitable back office systems may include a positive vehicle control system, a dispatch system, a vehicle yard and/or control tower, or another system that monitors operation of one or more wayside devices. The wayside device can represent equipment installed alongside a route 1508 to support operations, safety, and/or control of vehicle systems.

The vehicle system can represent a single vehicle 1510 or two or more vehicles traveling together along one or more routes. With respect to the two or more vehicles, the vehicles in the vehicle system may be mechanically coupled with each other (e.g., by couplers, hitches, etc.), or may be mechanically separate but logically coupled with each other in that the vehicles communicate with each other to travel along the route(s) together as a convoy, platoon, or the like. The vehicle system can include one or more propulsion-generating vehicles capable of propelling themselves (e.g., locomotives, automobiles, trucks, buses, etc.) and optionally one or more non-propulsion-generating vehicles that are incapable of propelling themselves. Suitable non-propulsive vehicles may include one or more of rail cars, trailers, hoppers, gondolas, tankers or tank cars, box cars, flat bed cars, MoW cars, intermodal cars, specialty cars, stack cars, fuel tenders, battery tenders, and auto-rack cars. These non-propulsive cars may be equipped or unequipped. And, some types of cars may be further specialized, such as a refrigerated car, passenger car, and the like; and may have onboard sensor packages (with or without a communication functionality), ECP brakes, and the like.

The wayside device can include one or more wayside component 1512. Suitable wayside components can perform one or more functions or operations. One example of a wayside component can be a crossing gate that raises or lowers. The crossing gate may prevent (or allow) vehicle systems to enter and pass by or through a wayside location or area 114. In one example, the wayside location or area is (or includes) an intersection between the route and at least one other route 116. A suitable intersection may be between routes of the same type (e.g., two or more rail tracks, two or more roads, etc.) or between routes of different types (e.g., a rail track and a road). Different types of routes may indicate which vehicle systems can travel on a route. A route of a first type (e.g., a rail route) may be traveled upon by rail vehicles, but not automobiles, trucks, etc. A route of a second type (e.g., a road) may be traveled up on by automobiles, trucks, etc., but not rail vehicles. Alternatively, the wayside location may not include an intersection or crossing but may be the location of a wayside device that is not at or near an intersection or crossing. In another example, the wayside location or area is a route segment that does not include an intersection or crossing.

Other wayside components can include a notification signal or a switch or joint. The notification may indicate status of the route to the vehicle systems, a health (or problem) with the vehicle system, or both. The route status can indicate whether the segment of the route ahead (e.g., downstream of the wayside device along the direction of movement of the vehicle system) is clear, occupied, or restricted. The switch or joint may be disposed at an intersection and can control the direction that vehicle systems move while passing through the intersection. For example, in a first state or condition, a switch or switch point may cause a vehicle system traversing or traveling over the switch or switch point to stay on the route and not enter onto the route. In different, second state or condition, the same switch or switch point may cause the vehicle system traversing or traveling over the switch or switch point to move from one route to another. Another example of wayside component can include a travel interruption device. These types of wayside component can operate to intentionally or purposefully move a vehicle system off the route, such as by derailing a rail vehicle system, moving the vehicle system onto a siding or other route, etc.

Another example of wayside component can include a location and/or movement detector of vehicle systems on the routes. These types of wayside component can detect the presence of vehicle systems, the direction in which the vehicle systems are moving, unique identities or identifiers of the vehicle systems, etc. Another example of wayside component can include a route circuit that includes one or more electrical circuits that detect the presence of a vehicle system on a segment of the route. These types of equipment can detect the presence of the vehicle system responsive to the wheels, axles, chassis, etc. of the vehicle system creating a short across parallel rails of the route.

Another example of wayside component can include one or more sensors that can detect and monitor various characteristics of the vehicle system and/or the surrounding environment. For example, the wayside component can include a hot bearing detector for measuring a temperature of a vehicle axle, a speed sensor measuring how fast the vehicle system is moving, a camera that detects and/or identifies the vehicle system, an acoustic sensor that may detect wheel defects or growling bearings, ambient temperatures, ambient pressures, ambient humidity, and the like. Other suitable wayside components, such as sensor packages, are disclosed herein.

**In** the illustrated example, the wayside component can monitor a route segment or a crossing gate and can detect the approach, passage through, and/or exit of a vehicle system through the segment and/or through the crossing. At the same time, the sensor package may inspect the vehicle for damage, failures, performance, and the like. The wayside component may query and communicate with an onboard controller, which may be able to communicate with onboard sensors if available. The wayside component can include or be connected with route circuits 1518, 1520, 1522 that are shunted or short circuited responsive to passage of a vehicle system over or through the corresponding circuits. Detection of this short or shunt can be recorded by a data recorder 1524 of the wayside device and/or can be communicated to a back office and/or to the vehicle itself. The communication may be selective, in one embodiment, with lesser important messaging going to the back office, and greater important messaging going to the vehicle, at least.

The wayside component can obtain and/or generate the data that is stored by the data recorder. For example, the wayside device can detect the presence of the vehicle system using the route circuits, can identify the vehicle system by communicating with the vehicle system (to obtain a unique identifier or road number associated with the vehicle system), and/or can determine the time(s) at which the circuits detect the vehicle system. These times can indicate when the vehicle system approaches the intersection by passage of the vehicle system over the approaching circuit, when the vehicle system enters the intersection by passage of the vehicle system over the first island circuit, and/or when the vehicle system leaves the intersection by passage of the end of the vehicle system over the second island circuit.

Suitable wayside components can include or represent a gate or other object that lowers or raises to create a physical barrier. This barrier may dissuade or prevent vehicle systems from crossing or entering the intersection while another vehicle system approaches and/or is passing through the intersection. The wayside component (e.g., the processor(s)) can direct the data recorder to record data indicative of whether the gate is properly operating (e.g., the gate lowers or raises on command), whether the gate is not properly operating (e.g., the gate does not lower or raise on command), or the like. Optionally, the wayside device can record other data, such as the times at which the signal is activated, the duration that the signal is activated, the color of the light generated by the signal, whether the signal was or was not activated upon command by the processor(s), the state or condition of the switch or switch point at different times, times at which the switch or switch point changes state or condition, the detection of vehicle systems, the identities of the vehicle systems, the directions of movement of the vehicle systems, the speeds of the vehicle systems, the state of the traffic interruption device, the time at which the traffic interruption device is activated to change movement of a vehicle system, the sensed characteristics of the vehicle system, the sensed characteristics of the environment, etc.

The wayside device may include or be connected with a communication device 1526. A suitable communication device may wirelessly communicate with one or more other communication devices. The communication device can represent transceiving circuitry, such as one or more antennas, modems, or the like. The communication device can represent a WiFi or other wireless access point that allows the wayside device to communicate with the vehicle systems passing through the intersection or passing by the wayside device. Optionally, the communication device can represent a radio transceiver, a cellular transceiver, a BLUETOOTH transceiver, a ZIGBEE transceiver, a Near Field Communication (NFC) interrogator or receiver, a radio frequency identification (RFID) interrogator or receiver, or the like. In one embodiment, the communication device may use a wire or fiberoptic to communicate data. A suitable wayside device may include both a sensor package and a communication package. Suitable sensors may include one or more of an optical sensor, an acoustic sensor, a magnetic sensor, as well as others described herein and selected based at least in part on the end use requirements. In one embodiment, the sensor package may include one or more electronic readers (e.g., RFID readers) that can communicate with tags or labels associated with various vehicles.

The communication device can be built into, or retrofitted to, the wayside device. For example, the communication device can be added to a pre-existing or previously installed wayside device and/or data recorder to permit communication of data between the wayside device or data recorder and the vehicle system(s). For example, the communication device can be taken to and connected with a data recorder of a wayside device that previously was operating as described herein, but where the wayside device previously was unable, not configured, or incapable of wirelessly communicating data prior to installation of the communication device.

The wayside component can record the data as the vehicle systems pass by the wayside component, and then wirelessly communicate the data to one or more of the vehicle systems as the vehicle systems pass by the wayside component. For example, instead of waiting for an operator to drive to the wayside device to connect to and download the data from the data recorder, the wayside device can wirelessly communicate the data to one or more of the vehicle systems passing through or near (e.g., within a wireless communication range of) the wayside device. The communication device of the wayside device may be unable to communicate the data directly to the remote system due to the remote system being farther from the wayside device than a wireless communication range of the communication device of the wayside device. Instead, the wayside device communicates the data to the vehicle system(s) passing within a communication range 1528 of the communication device of the wayside device. In one embodiment, the wayside device is communicatively coupled to a communication bus or network. This may be wired (electrical wiring or fiber optic) or wireless (radio, cell, sat-link). The vehicle system may communicate directly with the wayside device in some embodiments, and in other embodiments may communicate indirectly (via the communicate bus or network).

The vehicle system(s) receiving this data may pass through the intersection or section of the route that is monitored or controlled by the wayside device. Optionally, the vehicle system(s) receiving the data from the wayside device may not pass through the intersection or section of the route that is monitored or controlled by the wayside device but may pass close enough to the wayside device (e.g., on a nearby route) to receive data.

The vehicle system(s) may include communication devices that can receive the wayside device data. These vehicle system(s) may then communicate the data to the remote system. For example, the remote system may include a communication device 1530 that represents wireless transceiving hardware for communicating with the vehicle system(s). The remote system may include a controller 1532 (e.g., a remote system controller or the diagnostic controller described herein) that represents hardware circuitry including and/or connected with one or more processors that operate as described herein in connection with the remote system. Once the vehicle systems move to within a communication range of the remote system, the vehicle systems can communicate the wayside device data to the remote system. The remote system may be a back office system having regular communication abilities with the vehicle systems, but not with the wayside devices. The vehicle systems may be able to communicate with the back office system once the vehicle systems receive the data from the wayside device. Optionally, the vehicle systems can communicate the data to the remote system once the vehicle systems return to a wired network connection with the remote system, such as in a vehicle yard.

This can allow for the data collected or generated by the wayside device to be communicated to the remote system on a more regular basis than currently known wayside devices. If a fault, deterioration, or failure arises with operation of the wayside device, the data indicative of the fault, deterioration, or failure may be communicated to the remote system sooner than if the data was communicated only when an operator drives to the wayside device, downloads the data, returns to the remote system, and uploads the data to the remote system.

The remote system may include or represent hardware circuitry having or connected with one or more processors that examine the data from the wayside device. The remote system can examine the data to evaluate the state of the wayside device and, if needed, implement one or more responsive actions. For example, the remote system may examine the data and determine that the wayside component is not operating correctly. The remote system may send an operator to repair or inspect the wayside component responsive to determining that the wayside component is not operating correctly. Alternatively, the communication device of the wayside device may include a cellular transceiver that allows the wayside device to communicate the data to the remote system without passing the data to the remote system via one or more of the vehicle systems first.

The data optionally may be examined by the remote system to recreate or evaluate one or more events occurring in connection with the wayside device. For example, the data containing the times at which vehicle systems entered into and/or passed through the intersection, the times at which the gates lowered or raised (or did not move), etc., may be used to recreate the events leading up to and/or following a collision or other accident at or near the intersection.

The entirety of the data communicated from the wayside device to the remote system via the vehicle system(s) may not be communicated to only a single vehicle or a vehicle system before being forwarded to the remote system. For example, the size of the data to be communicated to the remote system may be too large and/or the bandwidth of the wireless connection between the wayside device and the vehicle system(s) may be too limited to permit all the data being communicated to the remote system to be communicated to a single vehicle system passing the wayside device. Instead, different portions or segments of the data may be communicated to different vehicles or different vehicle systems. For example, a first portion of the data stored in the data recorder may be communicated to a first vehicle of a vehicle system, a second portion of the data stored in the data recorder may be communicated to a second vehicle in the same vehicle system, and so on. As another example, a first portion of the data stored in the data recorder may be communicated to a first vehicle system, a second portion of the data stored in the data recorder may be communicated to a second vehicle system (that is separate from the vehicle first vehicle system), and so on. The different portions of the data may be non-overlapping portions in that no data included in one portion of the data also is included in another portion of the data. Alternatively, at least some of the data in one portion also is included in another portion of the data. The different portions of the data may be non-overlapping portions in that no data included in one portion of the data also is included in another portion of the data. Alternatively, at least some of the data in one portion also is included in another portion of the data.

The wayside device can communicate the data to vehicle systems only after identifying and confirming the identity of the vehicle systems in one example. For example, the wayside device may only communicate the data to vehicle systems owned or operated by the same company, entity, or the like, that operates the wayside device, to vehicle systems that are designated subscribers to receive the data (e.g., have previously signed up or otherwise indicated a desire to receive the data), etc. The identity of the vehicle systems may be communicated to the wayside device, and the wayside device can determine (based on stored identities in the data recorder) whether a vehicle system is or is not permitted to receive the data. The wayside device may then communicate (or not communicate) the data to the permitted vehicle systems.

The wayside device optionally may include a signal device 1534 that can indicate a state or condition of the wayside component. For example, the signal device may be one or more lamps that generate one or more lights to indicate whether the wayside component is operating as expected (e.g., generate a green light), is operating with one or more faults (e.g., generate a yellow light), or is not operating (e.g., generate a red light). The vehicle system may include a sensor 1536 that can detect the indicator generated by the signal device. For example, the sensor may be a camera, radio frequency (RF) sensor, photovoltaic cell, or the like, that can sense whether a lamp is activated by the wayside device and/or the color of the light generated by the lamp of the wayside device. This can permit the vehicle system to communicate the status of the wayside device to the remote system.

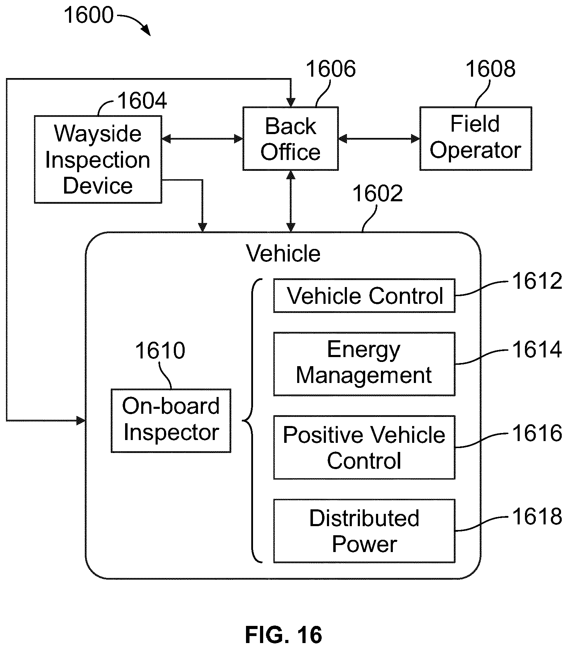

With reference to Figure 16, a diagram showing a diagnostic system 1600 having an embodiment of the inventive subject matter is shown. The system may include a wayside inspection device 1604, a back office system 1606, and a field operator 1608. A vehicle 1602 (or powered system) may have one or more onboard inspector devices 1610. The vehicle may have one or more of a vehicle control device 1612, an energy management system 1614, a positive vehicle control system 1616, and a distributed power system 1618. During operation, the onboard inspector, the wayside inspector, or both may detect an operating parameter that is determined to be within (or outside of) a determined threshold value associated therewith. Similarly, a field operator that is proximate to the operating vehicle may sense, observe, or measure the operating parameter and determine whether it is within (or outside of) a determined range. In one embodiment, the inspector, inspection device, and/or the field operator convey information about the operating parameter to a back office, to the vehicle directly, or both. The back office may issue a Bulletin to the vehicle based as least in part on the conveyed operating parameter information. Alternatively or additionally, the back office may rescind or withhold a Movement Authority based at least in part on the conveyed operating parameter. The Bulletin and/or Movement Authority may be communicated to the vehicle, or to a vehicle in the same vehicle system. In one embodiment where the operating parameter is communicated directly to the vehicle, including where the onboard inspection device is already aboard the vehicle, the Movement Authority and/or Bulletin are conveyed to the onboard Positive Vehicle Control device. Alternatively or additionally, the Movement Authority and/or Bulletin are conveyed to the vehicle controller, the energy management system, and/or the distributed power system. The vehicle controller may respond to the receipt as described herein.

In various embodiments, information on an operating parameter from sensors about a component on a vehicle (or on a vehicle that is in a vehicle system) is generated and reported ultimately arriving at the vehicle controller. That operating parameter can be conveyed in a raw form, or can be analyzed at a step along the transfer to determine if a threshold level has been meet and/or if the operating parameter is in (or outside of) a determined range. Upon the determination, the system may simply forward information in the form of a binary determination, such as "out of range", and/or the determination may be one of degree. A degree may be "slightly out" or "very out" of range, such that the response from the system may differ depending on the degree.

Suitable optical sensors may include an optical geometry sensor, an Infrared (IR) sensor such as a hot box or hot wheel bearing detector, a sensor package for tracking behavior (geometry) and tracking stability (hunting) of wheelsets and bogies, and the like. With regard to sensing tracking position defects, these may include head checking and gauge-corner cracking, as well as rail head cracking from shelling and longitudinal fatigue; and angle-of-attack defects relate to intermittent crown wear as lateral material flows, lateral fatigue cracking that can lead to rail breaks, and surface breaking cracks that can develop into rail squats, hunting defects may lead to a combination of wear patterns, in particular, repeated flange impacts and scrubbing wear actions against the rail. Other optical sensors may include laser scanners, such as the available from Wabtec Corporation.

With regard to acoustic sensors, suitable systems may be commercially available as KinetiX monitoring system, a component of which is the Track IQ system, from Wabtec Corporation. KinetiX may include the RailBAM system, which is a "Bearing Acoustic Monitor" (BAM) that can monitor the acoustic signature of each axle bearing passing the system at line speed. RailBAM technology can accurately and reliably identify the presence of defects in bearings. RailBAM can rank the bearing severity and fault type. In some cases, RailBAM can detect problem bearings in advance of heat generation caused by a bearing defect. A principle of operation for RailBAM's is analyzing sound characteristics, such as those emitted by bearing faults, wheel impacts, gearing operation, and the like. A bearing fault may excite a structural response in the bearing and the sound radiated from the housing is sampled. Proprietary signal processing techniques allow the bearing fault signal to be isolated other noise (e.g., wheel noise), enabling fault identification and classification. Bearings that can be monitored may include axle bearings, traction motor bearings, gearbox bearings, and the like. Other monitorable components may include brake systems (including brake pads and shoes), the engine, the horn, wheel round/true, and the like. Suitable sensor packages may include one or more of Wheel Impact Load (WILD), Truck Performance Detectors (TPD) and Truck Hunting Detectors (THD). Other suitable sensor packages may include one or more of Truck Performance Detectors (TPD), Truck Alignment Detectors (TAD) and Acoustic Bearing Detectors (ABD). Yet other suitable sensor packages may include one or more of Hot Box Detectors (HBD), Wheel Profile Measurement System (WPMS), and Dragging Equipment Detector and Low Air Hose Detectors. The sensor packages and their corresponding wayside component may be selected with reference to end use applications and operating parameters. In one embodiment, the wayside device may detect a loose wheel or wheelset.

In one embodiment, the controller receives information from the wayside regarding the health of a vehicle and determines there is an operational parameter that is measured outside of a determined threshold range. A feature of the controller is that in addition to whatever other responsive measures it may take, the controller engages the communication device to provide notice and information to local or regional emergency response agencies. In an embodiment, the system may differentiate between types of vehicles, or types of cargo on the vehicle (such as by comparing a vehicle ID to a manifest or the like). For example, if the controller detects a hot bearing on a vehicle passing by the wayside device, the controller may check by vehicle type (such as a bulk liquid tanker) or manifest to determine if the cargo is hazardous in some way. If the cargo is determined to be hazardous (such as the cargo having been tagged with a hazardous cargo designation previously, or its cargo is on a hazardous cargo list, or is not on a non-hazardous cargo list) then a notice is sent to the emergency response agency. Additional information may be provided, as well, such as quantity of hazardous material, type of hazard, type of hazardous material, other materials (type and quantity) listed in the manifest for the vehicle system, direction of travel, speed of the vehicle system, and the like.

In one embodiment, the system may alert emergency first responders of a scheduled travel of a vehicle system carrying hazardous cargo regardless of the detection of a mechanical issue being detected by the wayside device. The alert may include the intended arrival time, the type of vehicle(s), the type of hazard, the type of hazardous material, the quantity of hazardous material, the route and speed that is planned, and the departure time from the region of the vehicle system. Pre-loading the information with the emergency responders may then allow for more efficient response as they information is present with them in the case of a mechanical failure being detected by the wayside device and reported to the emergency responders. They may then be able to anticipate deployment of resources and the location to which they may deploy in a relatively timely manner. In one embodiment, the alert is pushed to determined individuals. In one embodiment, the alert is posted to a networked HMI (e.g., a webpage) such that a user may check the webpage to obtain information from the alert.

In one embodiment, the wayside devices are disposed along the route at determined intervals. In one embodiment, the interval is in a range of from about five miles (8 km) to about 9 miles (14.5 km) apart, from greater than about 9 miles (14.5 km) to less than about 11 miles (17.7 km) apart, or greater than about 11 miles apart. In another embodiment, the interval is in a range of from about 20 miles (32.19 km) to about 50 miles (80.47 km) apart. In one embodiment, the interval is determined based on various environmental factors such that, for example, in high population areas the intervals are closer together than in low population areas. Other factors may include traffic density, likelihood or frequency of hazardous cargo loads, the communication reach of various communication equipment, and the like. Economic considerations may play a role, both for initial capital cost for equipment and installation but also for upkeep and maintenance of installed equipment. Determinations about interval selection may be made with reference to application specific requirements. As such, interval selection is less likely to be arbitrary, and determined interval selections involve tradeoffs and risk evaluations.

With the periodic checking on the operating parameters of vehicles in the vehicle system, the controller may associate plural readings for a particular vehicle over time and distance. The controller may then, optionally, establish a baseline for each vehicle and then compare future readings against that baseline to determine if there are anomalies in its operation. This may allow for determinations both against absolute standards, as well as relative standards for specific vehicles. The controller may then, optionally, determine trendlines for incremental changes in operating behavior over time. As such, slow increases in heat over time and/or distance may signal that a component on the vehicle is failing, but may not yet have failed. This allows for responsive actions prior to failure. That is, predictive determinations may allow for responsive actions. These actions may include changing an operating mode of the vehicle, stopping the vehicle, routing the vehicle for maintenance rather than having it complete its mission, re-routing the vehicle to less populated areas, and the like. The responsive actions may be, in one embodiment, based at least in part on the failure mode that is anticipated, the type and quantity of the cargo (hazardous, yes, or no), the vehicle type and the available operating modes. As an example, if a traction motor bearing is heating up over time, but is not yet hot enough to indicate a failure, the vehicle control system may cut out the traction motor or may use it at reduced power. The traction motor can be further monitored by subsequent wayside devices to determine if the traction motor bearing continue to get hotter or if they have stabilized or are even cooling.

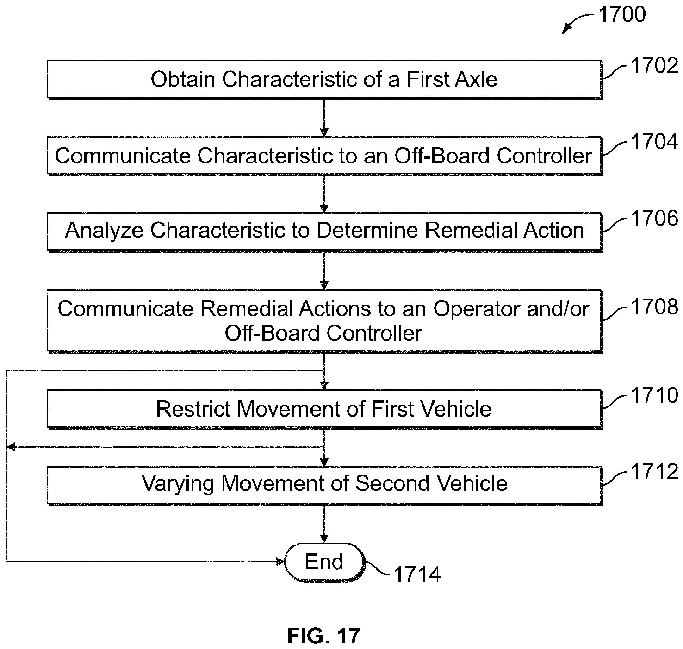

With reference to Figure 17, a block diagram is provided that illustrates a method 1700 according to an embodiment of the inventive subject matter. The method starts where a characteristic of a first axle is obtained at step 1702. The characteristic may be an operating parameter of the first axle. The first axle may be on a trail rail car in a train being pulled by a second vehicle, such as a locomotive. In this example, the sensor package is onboard the first or second vehicle. At step 1704 the characteristic may be communicated to an off-board controller. The off-board controller may be a back office, or may be an edge device located, for example, in a wayside device. At step 1706, the characteristic may be analyzed to determine a remedial action. The remedial action(s) may be communicated to a vehicle operator and/or to the vehicle controller onboard the vehicle at step 1708. If the communication is to the vehicle controller, then optionally the vehicle controller may initiate the remedial action; and, if the communication is to the vehicle operator they may decide to implement the remedial action. Regardless of the actor, if there is a remedial action to be taken then at step 1710 the movement of the first vehicle is restricted. This may be accomplished by varying or changing the movement of the second vehicle at step 1712. Upon remediation responsive to the detected characteristic, the method ends at step 1714.

In various embodiments of the above-disclosed method, the locomotive's movement is varied, i.e., controlled, through the positive vehicle control system, the energy management system, the distributed power system, and the like. For example, the vehicle control system detects anomalous behavior (e.g., bearing growl, increased drag, vibration patterns, thermal excursion readings, and the like) and sends information to that effect through a communication network to the back office. The back office determines that there is an existing or imminent failure and sends back, via the positive vehicle system, a Bulletin to stop or slow the vehicle system. The vehicle responds by slowing to a stop in a safe and controlled manner. Appropriate equipment and resources can be dispatched to the location of the vehicle to address the anomalous behavior. Also, if there are vehicle operators, they can be notified to check on the anomalous behavior. For example, the vehicle operators can be notified that rail car number "twenty second in the line" has been detected with a hot axle, and they can inspect that vehicle for that mechanical issue.

In one embodiment, the monitoring system may have a local data collection system deployed in the remote system that may use machine learning to enable derivation-based learning outcomes. The remote system may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the remote system may represent or include a policy engine that may apply one or more policies. These policies may be based at least in part on characteristics of a given item of equipment or environment. With respect to control policies, a neural network can receive input of a number of environmental and task-related parameters. These parameters may include the data obtained from the wayside device, such as identifications of vehicles approaching and/or passing the wayside device, times at which the vehicles were identified, times at which the wayside device changed state or condition, times at which a fault or failure of the wayside component was detected, etc.

The neural network may be included in the remote system and can be trained to generate an output based on these inputs, with the output representing an action or sequence of actions that the vehicle systems, remote system, and/or wayside device should take. For example, the neural network can direct or send signals to remotely control one or more of the vehicle systems (e.g., to change routes to avoid faulty or failed wayside component, to slow down to permit an operator to travel to and/or repair the wayside device, etc.), to remotely control the wayside device (e.g., to change a state or condition of the wayside component), to direct an operator to travel to and repair or inspect the wayside device, etc. During operation of one embodiment, a determination can occur by processing the inputs through the parameters of the neural network to generate a value at the output node designating that action as the desired action. This action may translate into a signal that causes the remote system, wayside device, and/or vehicle system to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The monitoring system may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the remote system executes that plan to achieve the desired input data to mirror the predicted best outcome scenario. Additionally, the success metric may be a combination of the optimized outcomes, which may be weighed relative to each other.

The monitoring system can use this artificial intelligence or machine learning to receive input (e.g., wayside device data), use a model that associates locations with different operating modes to select an operating mode or change in state/condition of the wayside device, and then provide an output (e.g., the change in operation of the wayside device and/or vehicle system using the model). The monitoring system may receive additional input of the change in operating mode that was selected, such as analysis of noise or interference in communication signals (or a lack thereof), operator input, or the like, that indicates whether the machine-selected operating mode provided a desirable outcome or not. Based on this additional input, the controller can change the model, such as by changing which operating mode would be selected when a similar or identical location or change in location is received the next time or iteration. The controller can then use the changed or updated model again to select an operating mode, receive feedback on the selected operating mode, change or update the model again, etc., in additional iterations to repeatedly improve or change the model using artificial intelligence or machine learning.

During operation, the vehicle system and/or the wayside system may send data to a back office, such as a positive vehicle control (PVC) system (one example of which is a Positive Train Control system), for use in evaluating functionality or health of the wayside device, the vehicle, or both. A PVC system can be a system that monitors locations of vehicles and vehicle systems, movements of the vehicles and/or vehicle systems, maintenance personnel, damaged segments of routes, segments of routes undergoing maintenance, route layouts, or the like. Such a system issues signals to onboard components of the vehicles to restrict how fast the vehicles can travel, which segments of routes that the vehicles can enter into (due to the presence or absence of other vehicles or vehicle systems in the segments, maintenance in the segments, damaged segments, etc.), and the like. Absent receiving such a signal, the onboard component of a vehicle or vehicle system will operate to automatically stop or prevent the vehicle or vehicle system from entering into an upcoming segment of a route. Once a signal is received granting permission to the vehicle or vehicle system, the onboard component of the vehicle or vehicle system may allow the vehicle or vehicle system to enter into the upcoming segment. Another example of such a system is a negative vehicle control (NVC) system. This system can be a system that monitors locations of vehicles and vehicle systems, movements of the vehicles and/or vehicle systems, maintenance personnel, damaged segments of routes, segments of routes undergoing maintenance, route layouts, or the like. The NVC system issues signals to onboard components of the vehicles to restrict how fast the vehicles can travel, which segments of routes that the vehicles can enter into (due to the presence or absence of other vehicles or vehicle systems in the segments, maintenance in the segments, damaged segments, etc.), and the like. In contrast to the PVC system, with the NVC system, absent receiving a signal from the NVC system, the onboard component of a vehicle or vehicle system will allow the vehicle or vehicle system to enter into an upcoming segment of a route. The NVC system will issue a signal to instruct the onboard component to prevent the vehicle or vehicle system from entering into the upcoming segment.

The remote system can use this data to determine if components are not functioning and, as a result, change how one or more vehicles can move. For example, the remote system can communicate movement authorities or bulletins to indicate restrictions on how and/or when vehicle systems can travel in different segments of a network of interconnected routes. These authorities/restrictions may prevent a vehicle from entering a route segment or crossing; or from passing the wayside device, may increase separation distances between vehicle systems, may prevent vehicle systems from entering an intersection too close in time to another vehicle system, may initiate a controlled stop of the vehicle system, and this all may be based at least in part on the identification of how a wayside device or a vehicle is, or is not, operating. A vehicle with a sparking DC traction motor and another vehicle with a hot bearing and yet another with a bearing that has fully failed may all be controlled differently relative to each other. The grounding DC traction motor example may have that traction motor cut out or may have its voltage limited. The vehicle with the hot bearing may be slowed, and by way of contrast the vehicle with the failed bearing may be stopped. Other examples illustrating the point involve detection of the health of an engine, leaks from a fuel tender, a rail car that is hunting severely enough that it can be predicted to derail, and so on.

In one embodiment, the wayside device (directly or via the back office) may communicate a signal to vehicle operators. The signal may identify a problem with a vehicle in the vehicle system, identify which vehicle of the vehicle system has the problem, indicate a severity of the problem, indicate an imminence of the problem occurring, indicate a recommended course of action, and the like. Due to potential transmission delays, the signal may include a time stamp. The vehicle operators may then respond to their receipt of the signal with a determined responsive action. In one embodiment, the wayside device (directly or via the back office) may communicate with first responders.

In one example, a wayside device monitoring system is provided that may include wayside component control movement of vehicle systems through a segment of a route and/or monitor operation and health of the vehicle systems. The wayside component can record data indicative of the one or more of controlling movement of the vehicle systems or monitoring operation of the vehicle systems. The monitoring system can include a communication device coupled with the wayside component. The communication device can communicate the data recorded by the wayside component to at least one of the vehicle systems as the at least one of the vehicle systems move by the wayside component.

The communication device may communicate the data to a remote system that remotely restricts movement of the vehicle system by communicating the data to the at least one of the vehicle systems. The communication device can be retrofitted to the wayside component. The wayside component may include a gate that raises or lowers to control access to an intersection. The wayside component may record one or more of an identity of one or more of the vehicle systems, a time at which the one or more of the vehicle systems passed the wayside component, and/or a time at which the wayside component raised or lowered the gate.

The wayside component may communicate the data to a remote system via at least one of the vehicle systems. The wayside component can communicate the data to the remote system via at least one of the vehicle systems while the remote system is outside of a wireless communication range of the communication device. The communication device may wirelessly communicate different portions of the data to different vehicles of the vehicle system as they move by the communication device.

In another example, a method for monitoring operation of a wayside device is provided. The method may include recording data obtained by wayside component (of the health of sensed components, for example) that one or more of: controls movement of vehicle systems through a segment of a route and/or monitors operation and health of the vehicle systems. The data that is recorded can be used to identify failed components and/or predict potential future failures (of which components, and when the failure might occur). The method may include communicating the determination to the vehicle. This may be done as vehicle moves by the wayside component.

The data may be communicated to the at least one of the vehicle systems for communication to a remote system that remotely restricts movement of the vehicle system by communicating the data to the at least one of the vehicle systems. The method also can include retrofitting a communication device to the wayside component. The data may be communicated to the at least one of the vehicle systems using the communication device. The data that is recorded may be associated with (e.g., generated in response to) raising and/or lowering a gate to control access to an intersection. The data may include one or more of an identity of one or more of the vehicle systems, a time at which the one or more of the vehicle systems passed the wayside component, and/or a time at which the wayside component raised or lowered the gate.

The method may include communicating the data from the at least one of the vehicle systems to a remote system. The data can be communicated to the remote system via at least one of the vehicle systems while the remote system is outside of a wireless communication range of the communication device. The data may be communicated by wirelessly communicating different portions of the data to different ones of the vehicle systems as the vehicle systems move by the communication device.

In another example, the wayside device may include a physical barrier, such as a gate that can be raised or lowered, to control access of vehicle systems to move into or through a route segment or through an intersection between routes. There may be a data recorder that can store data indicative of times at which the physical barrier is deployed or put away, that is, when the gate is raised or lowered. A communication device may wirelessly communicate the data to a remotely located back office system by wirelessly communicating the data to at least one of the vehicle systems while the at least one of the vehicle systems moves through the intersection.

The communication device may be initially installed, or may be retrofitted to the wayside device. The communication device can communicate different portions of the data to different ones of the vehicle systems. The communication device may wirelessly communicate the data to the at least one of the vehicle systems subsequent to determining an identity of the at least one of the vehicle systems.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

As used herein, an element or step recited in the singular and preceded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects.

The above description is illustrative, and not restrictive. In addition, many modifications may be made to adapt a particular situation or material to the teachings of the subject matter without departing from its scope as defined by the appended claims. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such claims are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A computer implemented method, comprising:
obtaining a thermal signature (326; 426; 526; 626; 726; 826; 926; 1026) for one or more first components (112, 114, 116, 118, 126) of a powered vehicle system (2, 4; 102; 1200, 1204; 1506; 1602), the thermal signature (326; 426; 526; 626; 726; 826; 926; 1026) representing thermal measurements obtained at different locations of the powered vehicle system (2, 4; 102; 1200, 1204; 1506; 1602); and
based on the thermal signature (326; 426; 526; 626; 726; 826; 926; 1026) for the one or more first components (112, 114, 116, 118, 126),
identifying an abnormal operating condition of the one or more first components (112, 114, 116, 118, 126) of the powered vehicle system (2, 4; 102; 1200, 1204; 1506; 1602), and
determining one or more second components (112, 114, 116, 118, 126) of the powered vehicle system (2, 4; 102; 1200, 1204; 1506; 1602) of which the thermal measurements were not obtained as a cause of the abnormal operating condition.

2. The method of claim 1, further comprising:
determining a cause of the abnormal operating condition based on the thermal signature (326; 426; 526; 626; 726; 826; 926; 1026).

3. The method of claim 2, wherein the cause of the abnormal operating condition is determined to be one or more of:
the one or more second components (112, 114, 116, 118, 126) of which the thermal measurements were not obtained;
a thermal management system (126) of the powered vehicle system (2, 4; 102; 1200, 1204; 1506; 1602);
an electric cable of at least one traction motor (112) of the powered vehicle system (2, 4; 102; 1200, 1204; 1506; 1602);
a motor (112) that raises or lowers a pantograph (116, 118) of the powered vehicle system (2, 4; 102; 1200, 1204; 1506; 1602); or
a coolant leak of the powered vehicle system (2, 4; 102; 1200, 1204; 1506; 1602).

4. The method of claim 1, wherein the thermal signature (326; 426; 526; 626; 726; 826; 926; 1026) is obtained from one or more thermal sensors (110) disposed in, on, or along a route (8; 108; 1508) that the powered vehicle system (2, 4; 102; 1200, 1204; 1506; 1602) moves, and the thermal signature (326; 426; 526; 626; 726; 826; 926; 1026) is obtained from the thermal measurements obtained by the one or more thermal sensors (110) during a single pass of the powered vehicle system (2, 4; 102; 1200, 1204; 1506; 1602) over or by the one or more thermal sensors (110).

5. The method of claim 1, wherein the abnormal operating condition is identified by comparing the thermal signature (326; 426; 526; 626; 726; 826; 926; 1026) to one or more thermal models that represent different combinations of the thermal measurements associated with different ones of the one or more first components (112, 114, 116, 118, 126) and associated with different extents of the abnormal operating condition.

6. The method of claim 5, further comprising:
selecting the one or more thermal models from several more thermal models based on one or more characteristics of the powered vehicle system (2, 4; 102; 1200, 1204; 1506; 1602), the one or more characteristics including one or more of a make and model of the powered vehicle system (2, 4; 102; 1200, 1204; 1506; 1602), an identification of the powered vehicle system (2, 4; 102; 1200, 1204; 1506; 1602), a usage history of the powered vehicle system (2, 4; 102; 1200, 1204; 1506; 1602), a maintenance history of the powered vehicle system (2, 4; 102; 1200, 1204; 1506; 1602), a manufacturing year of the powered vehicle system (2, 4; 102; 1200, 1204; 1506; 1602), a type of motor in the powered vehicle system (2, 4; 102; 1200, 1204; 1506; 1602), locations or layouts of the one or more first components (112, 114, 116, 118, 126) in the powered vehicle system (2, 4; 102; 1200, 1204; 1506; 1602), or a direction of movement of the powered vehicle system (2, 4; 102; 1200, 1204; 1506; 1602) while the thermal measurements were measured.

7. The method of claim 5, further comprising:
selecting the one or more thermal models from several more thermal models based on one or more ambient conditions, wherein the different combinations of the thermal measurements of the one or more thermal models include temperature comparisons, the temperature comparisons including one or more of:
differences between measured temperatures and an ambient temperature;
ratios of measured temperatures and an ambient temperature; or
averages or medians of the measured temperatures.

8. A diagnostic system (100; 1500; 1600), comprising:
one or more processors (42, 44, 64, 66, 80, 82, 98, 120, 1532) configured to obtain a thermal signature (326; 426; 526; 626; 726; 826; 926; 1026) for one or more first components (112, 114, 116, 118, 126) of a powered vehicle system (2, 4; 102; 1200, 1204; 1506; 1602), the thermal signature (326; 426; 526; 626; 726; 826; 926; 1026) representing thermal measurements obtained at different locations of the powered vehicle system (2, 4; 102; 1200, 1204; 1506; 1602),
based on the thermal signature (326; 426; 526; 626; 726; 826; 926; 1026) for the one or more first components (112, 114, 116, 118, 126),
the one or more processors configured
to identify an abnormal operating condition of the one or more first components (112, 114, 116, 118, 126) of the powered vehicle system (2, 4; 102; 1200, 1204; 1506; 1602), and
to determine, as a cause of the abnormal operating condition, one or more second components (112, 114, 116, 118, 126) of the powered vehicle system (2, 4; 102; 1200, 1204; 1506; 1602) of which the thermal measurements were not obtained.

9. The diagnostic system (100; 1500; 1600) of claim 8, wherein the one or more processors (42, 44, 64, 66, 80, 82, 98, 120, 1532) are configured to determine a cause of the abnormal operating condition based on the thermal signature (326; 426; 526; 626; 726; 826; 926; 1026), the one or more processors (42, 44, 64, 66, 80, 82, 98, 120, 1532) configured to determine the cause of the abnormal operating condition as one or more of:
the one or more second components (112, 114, 116, 118, 126) of which the thermal measurements were not obtained;
a thermal management system (126) of the powered vehicle system (2, 4; 102; 1200, 1204; 1506; 1602);
an electric cable of at least one traction motor (112) of the powered vehicle system (2, 4; 102; 1200, 1204; 1506; 1602); or
a motor (112) that raises or lowers a pantograph (116, 118) of the powered vehicle system (2, 4; 102; 1200, 1204; 1506; 1602); or
a coolant leak of the powered vehicle system (2, 4; 102; 1200, 1204; 1506; 1602).

10. The diagnostic system (100; 1500; 1600) of claim 8, wherein the one or more processors (42, 44, 64, 66, 80, 82, 98, 120, 1532) are configured to obtain the thermal signature (326; 426; 526; 626; 726; 826; 926; 1026) from one or more thermal sensors (110) disposed in, on, or along a route that the powered vehicle system (2, 4; 102; 1200, 1204; 1506; 1602) moves.

11. The diagnostic system (100; 1500; 1600) of claim 8, wherein the one or more processors (42, 44, 64, 66, 80, 82, 98, 120, 1532) are configured to identify the abnormal operating condition by comparing the thermal signature (326; 426; 526; 626; 726; 826; 926; 1026) to one or more thermal models that represent different combinations of the thermal measurements associated with different ones of the one or more first components (112, 114, 116, 118, 126) and associated with different extents of the abnormal operating condition.

12. The diagnostic system (100; 1500; 1600) of claim 11, wherein the one or more processors (42, 44, 64, 66, 80, 82, 98, 120, 1532) are configured to select the one or more thermal models from several more thermal models based on one or more characteristics of the powered vehicle system (2, 4; 102; 1200, 1204; 1506; 1602).

13. The diagnostic system (100; 1500; 1600) of claim 12, wherein the one or more characteristics include one or more of a make and model of the powered vehicle system (2, 4; 102; 1200, 1204; 1506; 1602), an identification of the powered vehicle system (2, 4; 102; 1200, 1204; 1506; 1602), a usage history of the powered vehicle system (2, 4; 102; 1200, 1204; 1506; 1602), a maintenance history of the powered vehicle system (2, 4; 102; 1200, 1204; 1506; 1602), a manufacturing year of the powered vehicle system (2, 4; 102; 1200, 1204; 1506; 1602), a type of motor in the powered vehicle system (2, 4; 102; 1200, 1204; 1506; 1602), locations or layouts of the one or more first components (112, 114, 116, 118, 126) in the powered vehicle system (2, 4; 102; 1200, 1204; 1506; 1602), or a direction of movement of the powered vehicle system (2, 4; 102; 1200, 1204; 1506; 1602) while the thermal measurements were measured.

14. The diagnostic system (100; 1500; 1600) of claim 11, wherein the one or more processors (42, 44, 64, 66, 80, 82, 98, 120, 1532) are configured to select the one or more thermal models from several more thermal models based on one or more ambient conditions.

15. The diagnostic system (100; 1500; 1600) of claim 11, wherein the different combinations of the thermal measurements of the one or more thermal models include temperature comparisons.

## Patentansprüche

1. Computerimplementiertes Verfahren, umfassend:
Erhalten einer thermischen Signatur (326; 426; 526; 626; 726; 826; 926; 1026) für eine oder mehrere erste Komponenten (112, 114, 116, 118, 126) eines angetriebenen Fahrzeugsystems (2, 4; 102; 1200, 1204; 1506; 1602), wobei die thermische Signatur (326; 426; 526; 626; 726; 826; 926; 1026) thermische Messungen darstellt, die an verschiedenen Positionen des angetriebenen Fahrzeugsystems (2, 4; 102; 1200, 1204; 1506; 1602) erhalten wurden; und
basierend auf der thermischen Signatur (326; 426; 526; 626; 726; 826; 926; 1026) für die eine oder mehreren ersten Komponenten (112, 114, 116, 118, 126),
Identifizieren eines abnormalen Betriebszustands der einen oder mehreren ersten Komponenten (112, 114, 116, 118, 126) des angetriebenen Fahrzeugsystems (2, 4; 102; 1200, 1204; 1506; 1602), und
Bestimmen einer oder mehrerer zweiter Komponenten (112, 114, 116, 118, 126) des angetriebenen Fahrzeugsystems (2, 4; 102; 1200, 1204; 1506; 1602), von denen die thermischen Messungen nicht erhalten wurden, als Ursache für den abnormalen Betriebszustand.

2. Verfahren nach Anspruch 1, ferner umfassend:
Bestimmen einer Ursache für den abnormalen Betriebszustand basierend auf der thermischen Signatur (326; 426; 526; 626; 726; 826; 926; 1026).

3. Verfahren nach Anspruch 2, wobei die Ursache für den abnormalen Betriebszustand als eines oder mehrere bestimmt wird von:
der einen oder den mehreren zweiten Komponenten (112, 114, 116, 118, 126), von denen die thermischen Messungen nicht erhalten wurden;
einem Thermomanagementsystem (126) des angetriebenen Fahrzeugsystems (2, 4; 102; 1200, 1204; 1506; 1602);
einem elektrischen Kabel von mindestens einem Traktionsmotor (112) des angetriebenen Fahrzeugsystems (2, 4; 102; 1200, 1204; 1506; 1602);
einem Motor (112), der einen Stromabnehmer (116, 118) des angetriebenen Fahrzeugsystems (2, 4; 102; 1200, 1204; 1506; 1602) anhebt oder absenkt; oder
einem Kühlmittelleck des angetriebenen Fahrzeugsystems (2, 4; 102; 1200, 1204; 1506; 1602).

4. Verfahren nach Anspruch 1, wobei die thermische Signatur (326; 426; 526; 626; 726; 826; 926; 1026) von einem oder mehreren thermischen Sensoren (110) erhalten wird, die in, auf oder entlang einer Route (8; 108; 1508) angeordnet sind, auf der sich das angetriebene Fahrzeugsystem (2, 4; 102; 1200, 1204; 1506; 1602) bewegt, und die thermische Signatur (326; 426; 526; 626; 726; 826; 926; 1026) aus den thermischen Messungen erhalten wird, die von dem einen oder den mehreren thermischen Sensoren (110) während einer einzelnen Überfahrt des angetriebenen Fahrzeugsystems (2, 4; 102; 1200, 1204; 1506; 1602) über oder durch den einen oder die mehreren thermischen Sensoren (110) erhalten werden.

5. Verfahren nach Anspruch 1, wobei der abnormale Betriebszustand durch Vergleichen der thermischen Signatur (326; 426; 526; 626; 726; 826; 926; 1026) mit einem oder mehreren thermischen Modellen identifiziert wird, die verschiedene Kombinationen der thermischen Messungen darstellen, die mit verschiedenen der einen oder mehreren ersten Komponenten (112, 114, 116, 118, 126) assoziiert sind und mit verschiedenen Ausmaßen des abnormalen Betriebszustands assoziiert sind.

6. Verfahren nach Anspruch 5, ferner umfassend:
Auswählen des einen oder der mehreren thermischen Modelle aus mehreren thermischen Modellen basierend auf einem oder mehreren Merkmalen des angetriebenen Fahrzeugsystems (2, 4; 102; 1200, 1204; 1506; 1602), wobei das eine oder die mehreren Merkmale eines oder mehrere von einer Marke und einem Modell des angetriebenen Fahrzeugsystems (2, 4; 102; 1200, 1204; 1506; 1602), einer Identifikation des angetriebenen Fahrzeugsystems (2, 4; 102; 1200, 1204; 1506; 1602), einer Nutzungsgeschichte des angetriebenen Fahrzeugsystems (2, 4; 102; 1200, 1204; 1506; 1602), einer Wartungsgeschichte des angetriebenen Fahrzeugsystems (2, 4; 102; 1200, 1204; 1506; 1602), einem Herstellungsjahr des angetriebenen Fahrzeugsystems (2, 4; 102; 1200, 1204; 1506; 1602), einem Motortyp im angetriebenen Fahrzeugsystem (2, 4; 102; 1200, 1204; 1506; 1602), Standorten oder Anordnungen der einen oder mehreren ersten Komponenten (112, 114, 116, 118, 126) in dem angetriebenen Fahrzeugsystem (2, 4; 102; 1200, 1204; 1506; 1602) oder einer Bewegungsrichtung des angetriebenen Fahrzeugsystems (2, 4; 102; 1200, 1204; 1506; 1602), während die thermischen Messungen gemessen wurden, einschließen.

7. Verfahren nach Anspruch 5, ferner umfassend:
Auswählen des einen oder der mehreren thermischen Modelle aus mehreren weiteren thermischen Modellen basierend auf einer oder mehreren Umgebungsbedingungen, wobei die verschiedenen Kombinationen der thermischen Messungen des einen oder der mehreren thermischen Modelle Temperaturvergleiche einschließen, wobei die Temperaturvergleiche eines oder mehrere einschließen von:
Unterschieden zwischen gemessenen Temperaturen und einer Umgebungstemperatur;
Verhältnissen von gemessenen Temperaturen und einer Umgebungstemperatur; oder
Mittelwerten oder Medianwerten der gemessenen Temperaturen.

8. Diagnosesystem (100; 1500; 1600), umfassend:
einen oder mehrere Prozessoren (42, 44, 64, 66, 80, 82, 98, 120, 1532), die konfiguriert sind, um eine thermische Signatur (326; 426; 526; 626; 726; 826; 926; 1026) für eine oder mehrere erste Komponenten (112, 114, 116, 118, 126) eines angetriebenen Fahrzeugsystems (2, 4; 102; 1200, 1204; 1506; 1602) zu erhalten, wobei die thermische Signatur (326; 426; 526; 626; 726; 826; 926; 1026) thermische Messungen darstellt, die an verschiedenen Positionen des angetriebenen Fahrzeugsystems (2, 4; 102; 1200, 1204; 1506; 1602) erhalten wurden,
basierend auf der thermischen Signatur (326; 426; 526; 626; 726; 826; 926; 1026) für die eine oder mehreren ersten Komponenten (112, 114, 116, 118, 126),
wobei der eine oder die mehreren Prozessoren konfiguriert sind,
um einen abnormalen Betriebszustand der einen oder mehreren ersten Komponenten (112, 114, 116, 118, 126) des angetriebenen Fahrzeugsystems (2, 4; 102; 1200, 1204; 1506; 1602) zu identifizieren, und
um als Ursache des abnormalen Betriebszustands eine oder mehrere zweite Komponenten (112, 114, 116, 118, 126) des angetriebenen Fahrzeugsystems (2, 4; 102; 1200, 1204; 1506; 1602) zu bestimmen, von denen die thermischen Messungen nicht erhalten wurden.

9. Diagnosesystem (100; 1500; 1600) nach Anspruch 8, wobei der eine oder die mehreren Prozessoren (42, 44, 64, 66, 80, 82, 98, 120, 1532) konfiguriert sind, um eine Ursache für den abnormalen Betriebszustand basierend auf der thermischen Signatur (326; 426; 526; 626; 726; 826; 926; 1026) zu bestimmen, wobei der eine oder die mehreren Prozessoren (42, 44, 64, 66, 80, 82, 98, 120, 1532) konfiguriert sind, um die Ursache für den abnormalen Betriebszustand zu bestimmen als eines oder mehrere von:
der einen oder den mehreren zweiten Komponenten (112, 114, 116, 118, 126), von denen die thermischen Messungen nicht erhalten wurden;
einem Thermomanagementsystem (126) des angetriebenen Fahrzeugsystems (2, 4; 102; 1200, 1204; 1506; 1602);
einem elektrischen Kabel von mindestens einem Traktionsmotor (112) des angetriebenen Fahrzeugsystems (2, 4; 102; 1200, 1204; 1506; 1602); oder
einem Motor (112), der einen Stromabnehmer (116, 118) des angetriebenen Fahrzeugsystems (2, 4; 102; 1200, 1204; 1506; 1602) anhebt oder absenkt; oder
einem Kühlmittelleck des angetriebenen Fahrzeugsystems (2, 4; 102; 1200, 1204; 1506; 1602).

10. Diagnosesystem (100; 1500; 1600) nach Anspruch 8, wobei der eine oder die mehreren Prozessoren (42, 44, 64, 66, 80, 82, 98, 120, 1532) konfiguriert sind, um die thermische Signatur (326; 426; 526; 626; 726; 826; 926; 1026) von einem oder mehreren thermischen Sensoren (110) zu erhalten, die in, auf oder entlang einer Route angeordnet sind, auf der sich das angetriebene Fahrzeugsystem (2, 4; 102; 1200, 1204; 1506; 1602) bewegt.

11. Diagnosesystem (100; 1500; 1600) nach Anspruch 8, wobei der eine oder die mehreren Prozessoren (42, 44, 64, 66, 80, 82, 98, 120, 1532) konfiguriert sind, um den abnormalen Betriebszustand durch Vergleichen der thermischen Signatur (326; 426; 526; 626; 726; 826; 926; 1026) mit einem oder mehreren thermischen Modellen, die verschiedene Kombinationen der thermischen Messungen darstellen, die mit verschiedenen der einen oder mehreren ersten Komponenten (112, 114, 116, 118, 126) verbunden sind und mit verschiedenen Ausmaßen des anormalen Betriebszustands verbunden sind, zu identifizieren.

12. Diagnosesystem (100; 1500; 1600) nach Anspruch 11, wobei der eine oder die mehreren Prozessoren (42, 44, 64, 66, 80, 82, 98, 120, 1532) konfiguriert sind, um das eine oder die mehreren thermischen Modelle aus mehreren weiteren thermischen Modellen basierend auf einem oder mehreren Merkmalen des angetriebenen Fahrzeugsystems (2, 4; 102; 1200, 1204; 1506; 1602) auszuwählen.

13. Diagnosesystem (100; 1500; 1600) nach Anspruch 12, wobei das eine oder die mehreren Merkmale eines oder mehrere von einer Marke und einem Modell des angetriebenen Fahrzeugsystems (2, 4; 102; 1200, 1204; 1506; 1602), einer Identifikation des angetriebenen Fahrzeugsystems (2, 4; 102; 1200, 1204; 1506; 1602), einer Nutzungsgeschichte des angetriebenen Fahrzeugsystems (2, 4; 102; 1200, 1204; 1506; 1602), einer Wartungsgeschichte des angetriebenen Fahrzeugsystems (2, 4; 102; 1200, 1204; 1506; 1602), einem Herstellungsjahr des angetriebenen Fahrzeugsystems (2, 4; 102; 1200, 1204; 1506; 1602), einem Motortyp im angetriebenen Fahrzeugsystem (2, 4; 102; 1200, 1204; 1506; 1602), Standorten oder Anordnungen der einen oder mehreren ersten Komponenten (112, 114, 116, 118, 126) in dem angetriebenen Fahrzeugsystem (2, 4; 102; 1200, 1204; 1506; 1602) oder einer Bewegungsrichtung des angetriebenen Fahrzeugsystems (2, 4; 102; 1200, 1204; 1506; 1602), während die thermischen Messungen gemessen wurden, einschließen.

14. Diagnosesystem (100; 1500; 1600) nach Anspruch 11, wobei der eine oder die mehreren Prozessoren (42, 44, 64, 66, 80, 82, 98, 120, 1532) konfiguriert sind, um das eine oder die mehreren thermischen Modelle aus mehreren weiteren thermischen Modellen basierend auf einer oder mehreren Umgebungsbedingungen auszuwählen.

15. Diagnosesystem (100; 1500; 1600) nach Anspruch 11, wobei die verschiedenen Kombinationen von thermischen Messungen des einen oder der mehreren thermischen Modelle Temperaturvergleiche einschließen.

## Revendications

1. Procédé mis en œuvre par ordinateur, comprenant :
l'obtention d'une signature thermique (326 ; 426 ; 526 ; 626 ; 726 ; 826 ; 926 ; 1026) pour un ou plusieurs premiers composants (112, 114, 116, 118, 126) d'un système de véhicule motorisé (2, 4 ; 102 ; 1200, 1204 ; 1506 ; 1602), la signature thermique (326 ; 426 ; 526 ; 626 ; 726 ; 826 ; 926 ; 1026) représentant des mesures thermiques obtenues au niveau de différents emplacements du système de véhicule motorisé (2, 4 ; 102 ; 1200, 1204 ; 1506 ; 1602) ; et
en fonction de la signature thermique (326 ; 426 ; 526 ; 626 ; 726 ; 826 ; 926 ; 1026) pour le ou les premiers composants (112, 114, 116, 118, 126),
l'identification d'une condition de fonctionnement anormale du ou des premiers composants (112, 114, 116, 118, 126) du système de véhicule motorisé (2, 4 ; 102 ; 1200, 1204 ; 1506 ; 1602), et
la détermination d'un ou plusieurs seconds composants (112, 114, 116, 118, 126) du système de véhicule motorisé (2, 4 ; 102 ; 1200, 1204 ; 1506 ; 1602) dont les mesures thermiques n'ont pas été obtenues en tant que cause de la condition de fonctionnement anormale.

2. Procédé selon la revendication 1, comprenant en outre :
la détermination d'une cause de la condition de fonctionnement anormale en fonction de la signature thermique (326 ; 426 ; 526 ; 626 ; 726 ; 826 ; 926 ; 1026).

3. Procédé selon la revendication 2, dans lequel la cause de la condition de fonctionnement anormale est déterminée comme étant un ou plusieurs parmi :
le ou les seconds composants (112, 114, 116, 118, 126) dont les mesures thermiques n'ont pas été obtenues ;
un système de gestion thermique (126) du système de véhicule motorisé (2, 4 ; 102 ; 1200, 1204 ; 1506 ; 1602) ;
un câble électrique d'au moins un moteur de traction (112) du système de véhicule motorisé (2, 4 ; 102 ; 1200, 1204 ; 1506 ; 1602) ;
un moteur (112) qui soulève ou abaisse un pantographe (116, 118) du système de véhicule motorisé (2, 4 ; 102 ; 1200, 1204 ; 1506 ; 1602) ; ou
une fuite de liquide de refroidissement du système de véhicule motorisé (2, 4 ; 102 ; 1200, 1204 ; 1506 ; 1602).

4. Procédé selon la revendication 1, dans lequel la signature thermique (326 ; 426 ; 526 ; 626 ; 726 ; 826 ; 926 ; 1026) est obtenue à partir d'un ou plusieurs capteurs thermiques (110) disposés dans, sur un itinéraire (8 ; 108 ; 1508) emprunté par le système de véhicule motorisé (2, 4 ; 102 ; 1200, 1204 ; 1506 ; 1602) ou le long de celui-ci, et la signature thermique (326 ; 426 ; 526 ; 626 ; 726 ; 826 ; 926 ; 1026) est obtenue à partir des mesures thermiques obtenues par le ou les capteurs thermiques (110) au cours d'un passage unique du système de véhicule motorisé (2, 4 ; 102 ; 1200, 1204 ; 1506 ; 1602) au-dessus du ou des capteurs thermiques (110) ou par celui ou ceux-ci.

5. Procédé selon la revendication 1, dans lequel la condition de fonctionnement anormale est identifiée en comparant la signature thermique (326 ; 426 ; 526 ; 626 ; 726 ; 826 ; 926 ; 1026) à un ou plusieurs modèles thermiques qui représentent différentes combinaisons des mesures thermiques associées à différents composants parmi le ou les premiers composants (112, 114, 116, 118, 126) et associées à différentes étendues de la condition de fonctionnement anormale.

6. Procédé selon la revendication 5, comprenant en outre :
la sélection du ou des modèles thermiques parmi plusieurs autres modèles thermiques en fonction d'une ou plusieurs caractéristiques du système de véhicule motorisé (2, 4 ; 102 ; 1200, 1204 ; 1506 ; 1602), la ou les caractéristiques comportant un ou plusieurs parmi une marque et un modèle du système de véhicule motorisé (2, 4 ; 102 ; 1200, 1204 ; 1506 ; 1602), une identification du système de véhicule motorisé (2, 4 ; 102 ; 1200, 1204 ; 1506 ; 1602), un historique d'utilisation du système de véhicule motorisé (2, 4 ; 102 ; 1200, 1204 ; 1506 ; 1602), un historique d'entretien du système de véhicule motorisé (2, 4 ; 102 ; 1200, 1204 ; 1506 ; 1602), une année de fabrication du système de véhicule motorisé (2, 4 ; 102 ; 1200, 1204 ; 1506 ; 1602), un type de moteur dans le système de véhicule motorisé (2, 4 ; 102 ; 1200, 1204 ; 1506 ; 1602), des emplacements ou des dispositions du ou des premiers composants (112, 114, 116, 118, 126) dans le système de véhicule motorisé (2, 4 ; 102 ; 1200, 1204 ; 1506 ; 1602), ou une direction de mouvement du système de véhicule motorisé (2, 4 ; 102 ; 1200, 1204 ; 1506 ; 1602) pendant que les mesures thermiques étaient mesurées.

7. Procédé selon la revendication 5, comprenant en outre :
la sélection du ou des modèles thermiques parmi plusieurs autres modèles thermiques en fonction d'une ou plusieurs conditions ambiantes, dans lequel les différentes combinaisons des mesures thermiques du ou des modèles thermiques comportent des comparaisons de température, les comparaisons de température comportant un ou plusieurs parmi :
des différences entre des températures mesurées et une température ambiante ;
des rapports entre des températures mesurées et une température ambiante ; ou
des moyennes ou médianes des températures mesurées.

8. Système de diagnostic (100 ; 1500 ; 1600), comprenant :
un ou plusieurs processeurs (42, 44, 64, 66, 80, 82, 98, 120, 1532) configurés pour obtenir une signature thermique (326 ; 426 ; 526 ; 626 ; 726 ; 826 ; 926 ; 1026) pour un ou plusieurs premiers composants (112, 114, 116, 118, 126) d'un système de véhicule motorisé (2, 4 ; 102 ; 1200, 1204 ; 1506 ; 1602), la signature thermique (326 ; 426 ; 526 ; 626 ; 726 ; 826 ; 926 ; 1026) représentant des mesures thermiques obtenues au niveau de différents emplacements du système de véhicule motorisé (2, 4 ; 102 ; 1200, 1204 ; 1506 ; 1602),
en fonction de la signature thermique (326 ; 426 ; 526 ; 626 ; 726 ; 826 ; 926 ; 1026) pour le ou les premiers composants (112, 114, 116, 118, 126),
le ou les processeurs étant configurés
pour identifier une condition de fonctionnement anormale du ou des premiers composants (112, 114, 116, 118, 126) du système de véhicule motorisé (2, 4 ; 102 ; 1200, 1204 ; 1506 ; 1602), et
pour déterminer, en tant que cause de la condition de fonctionnement anormale, un ou plusieurs seconds composants (112, 114, 116, 118, 126) du système de véhicule motorisé (2, 4 ; 102 ; 1200, 1204 ; 1506 ; 1602) dont les mesures thermiques n'ont pas été obtenues.

9. Système de diagnostic (100 ; 1500 ; 1600) selon la revendication 8, dans lequel le ou les processeurs (42, 44, 64, 66, 80, 82, 98, 120, 1532) sont configurés pour déterminer une cause de la condition de fonctionnement anormale en fonction de la signature thermique (326 ; 426 ; 526 ; 626 ; 726 ; 826 ; 926 ; 1026), le ou les processeurs (42, 44, 64, 66, 80, 82, 98, 120, 1532) étant configuré pour déterminer la cause de la condition de fonctionnement anormale comme un ou plusieurs parmi :
le ou les seconds composants (112, 114, 116, 118, 126) dont les mesures thermiques n'ont pas été obtenues ;
un système de gestion thermique (126) du système de véhicule motorisé (2, 4 ; 102 ; 1200, 1204 ; 1506 ; 1602) ;
un câble électrique d'au moins un moteur de traction (112) du système de véhicule motorisé (2, 4 ; 102 ; 1200, 1204 ; 1506 ; 1602) ; ou
un moteur (112) qui soulève ou abaisse un pantographe (116, 118) du système de véhicule motorisé (2, 4 ; 102 ; 1200, 1204 ; 1506 ; 1602) ; ou
une fuite de liquide de refroidissement du système de véhicule motorisé (2, 4 ; 102 ; 1200, 1204 ; 1506 ; 1602).

10. Système de diagnostic (100 ; 1500 ; 1600) selon la revendication 8, dans lequel le ou les processeurs (42, 44, 64, 66, 80, 82, 98, 120, 1532) sont configurés pour obtenir la signature thermique (326 ; 426 ; 526 ; 626 ; 726 ; 826 ; 926 ; 1026) à partir d'un ou plusieurs capteurs thermiques (110) disposés dans, sur un itinéraire emprunté par le système de véhicule motorisé (2, 4 ; 102 ; 1200, 1204 ; 1506 ; 1602) ou le long de celui-ci.

11. Système de diagnostic (100 ; 1500 ; 1600) selon la revendication 8, dans lequel le ou les processeurs (42, 44, 64, 66, 80, 82, 98, 120, 1532) sont configurés pour identifier la condition de fonctionnement anormale en comparant la signature thermique (326 ; 426 ; 526 ; 626 ; 726 ; 826 ; 926 ; 1026) à un ou plusieurs modèles thermiques qui représentent différentes combinaisons des mesures thermiques associées à différents composants parmi le ou les premiers composants (112, 114, 116, 118, 126) et associées à différentes étendues de la condition de fonctionnement anormale.

12. Système de diagnostic (100 ; 1500 ; 1600) selon la revendication 11, dans lequel le ou les processeurs (42, 44, 64, 66, 80, 82, 98, 120, 1532) sont configurés pour sélectionner le ou les modèles thermiques parmi plusieurs autres modèles thermiques en fonction d'une ou plusieurs caractéristiques du système de véhicule motorisé (2, 4 ; 102 ; 1200, 1204 ; 1506 ; 1602).

13. Système de diagnostic (100 ; 1500 ; 1600) selon la revendication 12, dans lequel la ou les caractéristiques comportent un ou plusieurs parmi une marque et un modèle du système de véhicule motorisé (2, 4 ; 102 ; 1200, 1204 ; 1506 ; 1602), une identification du système de véhicule motorisé (2, 4 ; 102 ; 1200, 1204 ; 1506 ; 1602), un historique d'utilisation du système de véhicule motorisé (2, 4 ; 102 ; 1200, 1204 ; 1506 ; 1602), un historique d'entretien du système de véhicule motorisé (2, 4 ; 102 ; 1200, 1204 ; 1506 ; 1602), une année de fabrication du système de véhicule motorisé (2, 4 ; 102 ; 1200, 1204 ; 1506 ; 1602), un type de moteur dans le système de véhicule motorisé (2, 4 ; 102 ; 1200, 1204 ; 1506 ; 1602), des emplacements ou des dispositions du ou des premiers composants (112, 114, 116, 118, 126) dans le système de véhicule motorisé (2, 4 ; 102 ; 1200, 1204 ; 1506 ; 1602), ou une direction de mouvement du système de véhicule motorisé (2, 4 ; 102 ; 1200, 1204 ; 1506 ; 1602) pendant que les mesures thermiques étaient mesurées.

14. Système de diagnostic (100 ; 1500 ; 1600) selon la revendication 11, dans lequel le ou les processeurs (42, 44, 64, 66, 80, 82, 98, 120, 1532) sont configurés pour sélectionner le ou les modèles thermiques parmi plusieurs autres modèles thermiques en fonction d'une ou plusieurs conditions ambiantes.

15. Système de diagnostic (100 ; 1500 ; 1600) selon la revendication 11, dans lequel les différentes combinaisons des mesures thermiques du ou des modèles thermiques comportent des comparaisons de température.
